# EUROPEAN PATENT APPLICATION

(11) **EP 4 625 195 A1**
(43) Date of publication of application: **01.10.2025**
(21) Application number: 24167479.5
(22) Date of filing: 28.03.2024
(51) Int. Cl.: G06F 15/78

(54) **AUTONOMOUSLY STRUCTURALLY AND FUNCTIONALLY PLASTIC HARDWARE**

(71) Applicant: LTU Licens AB, SE-977 75 LULEÅ (SE)
(72) Inventor: Delsing, Jerker, 977 75 Luleå (SE); Paniagua, Cristina, 977 75 Luleå (SE); Sing Chouhan, Shailesh, 977 75 Luleå (SE)
(74) Representative: Ström & Gulliksson AB

(57) **Abstract**

A chiplet arrangement (100) is presented. The chiplet arrangement (100) is configured to provide autonomous structural and functional plasticity from a hardware, or hardware and software, perspective. The chiplet arrangement (100) is provided with a chiplet control plane (300) configured to orchestrate one or more microsystems (200) of the chiplet arrangement (100), wherein each microsystem (200) comprising at least one hardware resource (112) and an associated microservice (400) addressable at an internal communications interface (120) and/or at an external communications interface (150) of the chiplet arrangement (100). The chiplet arrangement (100) is further provided with a chiplet placticity plane (800) configured to provide awareness data of the chiplet arrangement (100), determine an opportunity of reconfiguration of the one or more microsystems (200) of the chiplet arrangement (100) based the awareness data, cause provisioning of a new microsystem based on the determined opportunity, and control the chiplet control plane (300) to deploy the new microsystem at the chiplet arrangement (100).

## Description

### TECHNICAL FIELD

The present invention relates to reconfigurable systems and more precisely to an autonomously structurally and functionally plastic hardware system.

### BACKGROUND

According to Moore's law, every two years the number of transistors in an integrated circuit (IC) doubles. However, due to high costs, the pace of silicon manufacturing improvement is decelerating, and it is increasingly challenging to produce commercially viable chips on smaller and smaller scales. The current development of monolithic chips faces not only economical limitations but also challenges in terms of supply/demand, flexibility and competitiveness. Generally, from the early design phases, the chip is conceived without the possibility of future change or evolution, thereby hampering the reuse of hardware.

In response to this situation, chiplets have emerged as a promising solution. Generally, a chiplet is a modular semiconductor component that is configured to perform a specific function or subset of functions within larger integrated circuit. A chiplet may be combined with other chiplets to form a more complex integrated circuit, offering greater flexibility in design and manufacturing.

The concept of chiplets has been around for several decades, with the first examples appearing in the 1980s. At that time, chiplets were primarily used for memory and I/O functions, and were mounted on separate packages that were connected to the main processor through a bus interface. In recent years, chiplets have gained renewed interest due to advances in semiconductor packaging technology and the increasing complexity of modern electronic devices. By breaking down a complex system or system-on-chip (SoC) into smaller, more manageable components, chiplets offer several advantages.

To facilitate the use of chiplets, industry groups and standards bodies have developed interfaces and protocols for connecting and communicating between chiplets. Examples include the Chiplet Integration Interface (CII) from the Semiconductor Industry Association (SIA) and the Advanced Interface Bus (AIB) from the Open Compute Project (OCP). Chiplets are a promising approach to designing and manufacturing complex semiconductor devices, offering greater flexibility, efficiency, yield, scalability, optimized performance, and reliability.

The flexibility in design and manufacturing of chiplets facilitates provisioning of hardware that may be configured to perform a vast number of different tasks. However, a chiplet is a locked solution like creating PCBs serving a particular task or functionality. Although standardization work is progressing, the full potential of chiplets is yet to be exploited.

### SUMMARY

It is in view of the above considerations and others that the various aspects and embodiments disclosed herein have been made.

A general object of the present disclosure is therefore to provide a new type of system and method which is improved over prior art and which eliminates or at least mitigates one or more of the drawbacks discussed above.

In view of the above, it is for example an object to provide a chiplet arrangement and a corresponding computer-implemented method of providing a chiplet arrangement that allow for more flexibility and adaptability.

More specifically, an object of the disclosure is to provide a chiplet arrangement that is configured to, at runtime, autonomously change, update or otherwise modify a structural and/or functional composition of hardware and/or service(s) provided by the chiplet arrangement. An associated method is also provided. These objects are addressed by the technique set forth in the appended independent claims with preferred embodiments defined in the dependent claims related thereto.

In a first aspect, a chiplet arrangement is presented. The chiplet arrangement is configured to provide autonomous structural and functional plasticity from a hardware, or hardware and software, perspective. The chiplet arrangement is controllable via an external communications interface of the chiplet arrangement and the chiplet arrangement comprises an internal communications interface and at least one chiplet connected to the internal communications interface. The at least one chiplet comprises at least one hardware resource. The chiplet arrangement is provided with a chiplet control plane configured to orchestrate one or more microsystems of the chiplet arrangement. Each microsystem comprises at least one hardware resource and an associated microservice addressable at the internal communications interface and/or at the external communications interface of the chiplet arrangement. The chiplet arrangement is further provided with a chiplet placticity plane configured to, by an awareness process, provide awareness data associated with an environment of the chiplet arrangement and by a governance model, determine an opportunity of reconfiguration of the one or more microsystems of the chiplet arrangement based on the awareness data. The chiplet placticity plane is further configured to cause provisioning of a new microsystem based on the determined opportunity, and accordingly control the chiplet control plane to deploy the new microsystem at the chiplet arrangement.

In a second aspect, a computer implemented method of providing autonomous structural and functional plasticity from a hardware, or hardware and software, perspective, of a computer system is presented. The computer system comprises a plurality of hardware resources. The computer implemented method comprises orchestrating one or more microsystems of the computer system, wherein each microsystem comprises at least one hardware resource and an associated microservice addressable at an internal or external communications interface of the computer system. The method further comprises obtaining, by an awareness process, awareness data associated with an environment of the computer system and determining, by a governance model, opportunity of reconfiguration of microsystems of the computer system based on the awareness data. The method further comprises providing a new microsystem based on the determined opportunity, and deploying the new microsystem at the computer system.

In a third aspect, a computer program product comprising program code for performing, when executed by processing circuitry of a computer system, the computer implemented method of the second aspect.

### BRIEF DESCRIPTION OF THE DRAWINGS

Aspect and embodiments of the present disclosure will be described in the following; references being made to the appended diagrammatical drawings which illustrate non-limiting examples of how the inventive concept can be reduced into practice.
Fig. 1 is a schematic view of a chiplet arrangement according to some examples of the present disclosure;
Fig. 2 is a schematic view of a chiplet according to some examples of the present disclosure;
Fig. 3 is a schematic view of a microsystem associated with a microservice according to some examples of the present disclosure;
Fig. 4 is a schematic view of a chiplet arrangement according to some examples of the present disclosure;
Fig. 5 is a schematic view of a control plane according to some examples of the present disclosure;
Fig. 6 is a SysML sequence diagram of dynamic instantiation of a microsystem according to some examples of the present disclosure;
Fig. 7 is a schematic view of a microsystem model for a chiplet arrangement according to some examples of the present disclosure;
Fig. 8 is a schematic view of a method according to some examples of the present disclosure;
Fig. 9 is a hierarchical view of an exemplary chiplet arrangement environment model according to an example;
Fig. 10 is a timeline graph of a lifecycle of a chiplet arrangement according to an example;
Fig. 11 is a schematic view of a chiplet arrangement according to some examples of the present disclosure;
Fig. 12 is a schematic view of an awareness process of a plasticity plane according to some examples of the present disclosure;
Fig. 13 is a schematic view of a governance model of a plasticity plane according to some examples of the present disclosure;
Fig. 14 is a schematic view of a computer system according to some examples of the present disclosure;
Fig. 15 is a schematic view of a method of providing autonomous structural and functional plasticity from a hardware, or hardware and software, perspective, of a computer system; and
Fig. 16 is a schematic view of a computer program product according to some examples of the present disclosure.

### DETAILED DESCRIPTION OF EMBODIMENTS

Hereinafter, certain embodiments will be described more fully with reference to the accompanying drawings. The invention may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

The term "coupled" is defined as connected, although not necessarily directly, and not necessarily mechanically. Similarly, the term "connected", or "operatively connected", is defined as connected, although not necessarily directly, and not necessarily mechanically. Two or more items that are "coupled" or "connected" may be integral with each other. The terms "a" and "an" are defined as one or more unless this disclosure explicitly requires otherwise. The terms "substantially", "approximately" and "about" are defined as largely, but not necessarily wholly as what is specified, as understood by a person of ordinary skill in the art. The terms "comprise" (and any forms thereof), "have" (and any forms thereof), "include" (and any form thereof) and "contain" (and any forms thereof) are open-ended linking verbs. As a result, a method that "comprises", "has", "includes" or "contains" one or more steps, possesses those one or more steps, but is not limited to possessing only those one or more steps.

### CHIPLET ARRANGEMENTS

For the present disclosure, a chiplet is a, commonly, tiny integrated circuit (IC) that comprises a well-defined subset of functionality. It is designed to be combined with other chiplets to form a chiplet arrangement. The chiplet arrangement may (but is not required to) be provided on a common interposer in a single package. The chiplets of a chiplet arrangement are connected using a network structure exemplified by, but not limited to, current well known structures like AIB, PCIe, UIB (chiplet bus standard led by Intel), etc. It should be mentioned that chiplet to chiplet communication may be direct or indirect (i.e. via one or more other chiplets). Chiplets may be configured with substantially any hardware and, optionally, software functionality. A chiplet may comprise, or consist, of configurable hardware such as Complex Programmable Logic Devices (CPLDs) and/or Field Programmable Gate Arrays (FPGAs).

Chiplet arrangements have several benefits compared to, e.g., large scale integrated circuits (ICs). As chiplet arrangements separate different functions into discrete chiplets, chiplet arrangements make it easier to isolate and fix defects during manufacturing. This may lead to higher overall yield rates and lower costs. By mixing and matching different chiplets, designers are able to create custom chiplet arrangements in the form of system on chips (SoCs) that are optimized for specific applications. This may result in more efficient, higher-performing devices. By working with smaller, more manageable constitutional components in the form of chiplets, designers are able to iterate more quickly, and test individual constitutional components more thoroughly before integrating them into a larger system of a chiplet arrangement. The designers are further able to add on-the-fly or remove the component(s) from the SoC if needed. This, makes it comfortable for design engineers in scaling the performance and complexity of the overall system. Chiplets enable companies to take advantage of economies of scale and reuse existing chip designs, which reduces cost of new developments. Chiplets support a variety of applications ranging from high power (server in data centers) to battery-operated devices (smartwatch). The philosophy behind chiplet allows interoperability among different vendors of chiplets. This leads to improved performance when compared with a single monolithic chip solution.

The configurability of chiplets from a hardware perspective has historically been isolated from a corresponding software configurability. A software functionality of a chiplet is generally limited to the functionality provided by each of the different chiplets. Each chiplet is addressed using a hardware abstraction layer (HAL), generally specific for each chiplet.

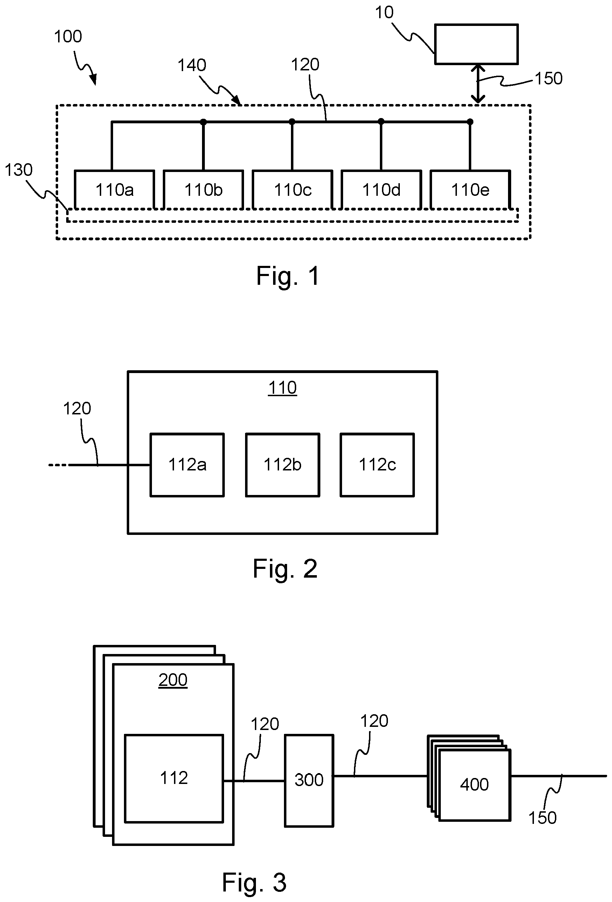

In Fig. 1, a simplified view of a chiplet arrangement 100 is shown. The chiplet arrangement 100 comprises a plurality of chiplets 110a, 110b, 110c, 110d, 110e. The chiplet arrangement 100 in Fig. 1 is disclosed to comprise a plurality of chiplets 110a, 110b, 110c, 110d, 110e, i.e. two or more chiplets, but the skilled person will appreciate that a chiplet arrangement 100 may sometimes include one single chiplet 110a, 110b, 110c, 110d, 110e. The chiplets 110a, 110b, 110c, 110d, 110e are connected by an internal communications interface 120, sometimes referred to as a chiplet network 120, enabling communication between the chiplets 110a, 110b, 110c, 110d, 110e. The chiplet arrangement 100 is controllable by an external interface 150 enabling the chiplet arrangement 100 to control, be controlled by or otherwise interact with one or more external systems 10. The chiplets 110a, 110b, 110c, 110d, 110e of the chiplet arrangement 100 may all be arranged on a common interposer 130 and optionally form a chiplet package 140. In other examples of the present disclosure, the chiplet arrangement 100 may comprise a number of chiplets 110a, 110b, 110c, 110d, 110e arranged on different interposers 130 and/or forming different chiplet packages 140. Regardless of the arrangement or the number of chiplets 110a, 110b, 110c, 110d, 110e, the chiplets 110a, 110b, 110c, 110d, 110e are connected by the internal communications interface 120. A chiplet arrangement 100 according to the present disclosure may be referred to as one or more of a multi-chip module (MCM), hybrid IC, 2.5D IC, or an advanced package.

The internal communications interface 120 may be any suitable network, interface or corresponding connection that enables communication between the chiplets 110a, 110b, 110c, 110d, 110e, and/or between chiplets 110a, 110b, 110c, 110d, 110e and the external interface 150. In some examples the internal communications interface 120 may be a network configured according to one or more network standards such as UCIe, Bunch of Wires (BoW), OpenHBI, or OIF XSR. The internal communications interface 120 is not necessarily formed of one physical or virtual network but may be a combination of one or more physical networks and/or one more virtual networks. This will be further explained in later sections.

In Fig. 1, the chiplet arrangement 100 is shown comprising five chiplets 110a, 110b, 110c, 110d, 110e. This is for illustrative examples only and the skilled person will appreciate that the chiplet arrangement 100 may comprise any number of chiplets 110a, 110b, 110c, 110d, 110e. In fact, as mentioned and as will be apparent after digestion of the complete disclosure, the teachings presented herein are applicable also to a single chiplet 110a, 110b, 110c, 110d, 110e.

The skilled person will appreciate that the chiplets 1 10a, 110b, 110c, 110d, 110e, chiplet arrangements 100 and other features presented herein may be presented in a simplified and/or condensed form in order to make the present disclosure as efficient as possible. For instance, the chiplet arrangement 100 of Fig. 1 will generally require some form of power distribution in order to provide and/or control power to the chiplets 110a, 110b, 110c, 110d, 110e. Such features and configurations are well known to the skilled person and need not be further explained.

In Fig. 2, an exemplary simplified block diagram of a chiplet 110 is shown. The chiplet 110 comprises at least one hardware resource 112a, 112b, 112c. The chiplet 110 of Fig. 2 is shown with three hardware resources 112a, 112b, 112c, but any number of hardware resources is applicable. At least one of the hardware resources 112a, 112b, 112c of the chiplet 110 is addressable at the internal communications interface 120. To this end, a first hardware resource 112a may be a network interface hardware resource configured to connect the chiplet 110 to, and communicate via, the internal communications interface 120. A second hardware resource 112b may be a computational hardware resource such as a CPU, a GPU or a microcontroller. A third hardware resource 112c may be a data storage unit, i.e. a memory hardware resource such as a volatile memory or a non-volatile memory. A chiplet 110 comprising a network interface hardware resource, a computational hardware resource and a memory hardware resource may be considered a minimum chiplet 110. However, not all hardware resources 112a, 112b, 112c may be addressable across the internal communications interface 120, and from a perspective of the chiplet arrangement 100, a specific chiplet 110 may comprise only a computational hardware resource as an only addressable resource of that specific chiplet 110.

The chiplet 110 may comprise further hardware resources 112a, 112b, 112c such as, but not limited to, sensor hardware resources. Sensor hardware resources, i.e. data acquisition units, may be exemplified as a temperature sensor, a pressure sensor, a light sensor, an optical sensor, a voltage sensor, a fingerprint sensor etc. Additionally, or alternatively, the chiplet 110 may comprise hardware resources 112a, 112b, 112c in the form of peripheral hardware resources. Peripheral hardware resources may be exemplified as, but not limited to, an interrupt controller, a DMA controller, a digital/analog I/O, a DAC, an ADC, a clock, a peripheral I/O device, a peripheral storage device, a peripheral display devices, a peripheral communication devices, etc. Additionally, or alternatively, the chiplet 110 may comprise hardware resources 112a, 112b, 112c in the form of a communication hardware resource. Communication hardware resources may be exemplified as, but not limited to, a PCIe interface or an UCIe interface. Additionally, or alternatively, the chiplet 110 may comprise hardware resources 112a, 112b, 112c in the form of an actuator hardware resource. Actuator hardware resources may be exemplified as, but not limited to, a loudspeaker, a buzzer, a soft-switch, a light source, a display etc.

It should be mentioned that each hardware resource 112a, 112b, 112c may be associated with one or more properties, e.g. capabilities, specifications etc. These properties may be provided by e.g. a vendor, supplier or designer of the hardware resource 112a, 112b, 112c. In some examples, some or all hardware resources 112a, 112b, 112c may be associated with a model of the hardware resource 112a, 112b, 112c that may be utilized in simulation of the hardware resource 112a, 112b, 112c.

In order to allow full flexibility of a chiplet and also to increase utilization of resources of a SoC, the inventors behind the present disclosure have realized that a chiplet, or a collection of chiplets, may be shared and utilized using a plurality of microsystems and associated produced and/or consumed microservices of the plurality of microsystems.

### MICRO SERVICES

Generally, microservices are a software architectural approach in which a large application is broken down into small, independent, and loosely coupled services that may be developed, deployed, and maintained separately. Each microservice typically performs a specific function (e.g. business function etc.) and communicates with other microservices via lightweight mechanisms such as HTTP messaging protocols (MQTT, CoAP, etc.). This approach allows for faster and more efficient development, deployment, and scaling of the application, as well as increased resilience and fault tolerance. Microservices also enable teams to work independently on different parts of the application, with each team responsible for developing and maintaining their own microservice. This approach may improve overall development speed and reduce the risk of conflicts or dependencies between teams. Overall, microservices may provide greater agility, scalability, and reliability in large and complex information systems/computer systems.

Historically, microservices have been designed to be deployed as independent, lightweight components that can be run on a distributed system of commodity hardware. This allows for greater scalability and fault tolerance than running a monolithic application on a single server or server cluster. One common hardware configuration for microservices are cloud-based infrastructures. A common choice is to deploy microservices in the cloud using services such as Amazon Web Services (AWS), Microsoft Azure, or Google Cloud Platform (GCP). These cloud providers offer a variety of services and tools for running and managing microservices, including container orchestration platforms like Kubernetes. Alternatively, microservices may be run on virtual machines (VMs) using hypervisors such as VMware or Hyper-V. This allows for greater flexibility in deploying and scaling microservices across different hardware configurations. In some cases, microservices may be deployed on edge devices such as internet of things (IoT) devices or embedded systems. This requires a lightweight runtime environment that can run on resource-constrained hardware.

It is generally agreed that microservices have evolved from service-oriented architecture (SOA), and are commonly considered equivalent to, or a subset of, SOA. Microservices and SOA share many attributes, such as nonfunctional requirements, that are provided by the architecture and that are key for this work. To exemplify, systems are able to discover services at run-time, without the need to have their address fixed at design time. This is usually achieved through some type of service registry, where service producers advertise their offerings enabling consumers to find them even in dynamic environments. Generally, the services communicate only through designed APIs, holding the concepts of information hiding and encapsulation. In this way, services do not share dependencies with each other and can be modified, internally, as needed without impacting the behavior of other services. Further to this, service exchanges commonly happen at run-time and may change based on present conditions. Therefore, services do not need to be aggregated pre-deployment, as in early binding, enabling application self-healing and optimization in the execution environment. These capabilities require more logic that can be added to each system or delegated to a mediator that will organize the network.

### MICROSYSTEMS

The inventors behind the present disclosure have realized that, not only may microservices be deployed and executed by chiplets 110, the chiplets 110 themselves may be managed and controlled correspondingly to microservices. That is to say, hardware recourses 112 of a chiplet 110, or a plurality of chiplets 110, may be configured to form a microsystem 200, see Fig. 3.

In Fig. 3, a microsystem 200 according to the present disclosure is shown. The microsystem 200 provides behavior based on stored, or obtained data and computation thereupon. The resulting capabilities are externally exposed through one or more produced microservices 400. A microsystem 200 is composed of (e.g., comprises, configured with) one or more hardware resources 112 that execute one to several tasks and processes to form the functionality. A specific microsystem 200 may be associated with one or more hardware resources 112 from one specific chiplet 110 of the chiplet arrangement 100, or associated with hardware resources 112 from two or more chiplets 110 of the chiplet arrangement 100. As will be taught in later sections, microsystems 200 may be dynamically instantiated and subsequently re-worked at runtime. Thus enabling flexible use and reuse of engaged hardware resources 112. Instantiation will be further explained in later sections. The microsystem 200 may comprise configurable or static software (program instructions) stored by and executable by the hardware resource(s) of the microsystem 200. It should be mentioned that microsystems 200 defined solely by the hardware resources 112 and that provide the desired functionality without requiring software.

Orchestration of the microsystem(s) 200 is provided by a control plane 300. The orchestration by the control plane 300 of one or more microsystems 200 may comprise, but is not limited to, managing microsystems 200, coordinating the deployment of microsystems 200, scaling microsystems 200, and/or control operation of microsystems 200. The control plane 300 is advantageously further configured to orchestrate microservices 400 exposed at the external communications interface 150. The orchestration by the control plane 300 of one or more microservices 400 may comprise, but is not limited to, managing microservices 400, coordinating the deployment of microservices 400, scaling microservices 400, and/or control operation of microservices 400. The control plane 300 is further advantageously configured to orchestrate binding (association) between a specific microsystem 200 and one or more microservices 400.

Advantageously, the microservices 400 are registered at an external resource registry associated with the external system 10. The registration of the microservices 400 at the external resource registry of the external system 10 may be provide by the control plane 300. One or more microsystems 200 may be provided with software instructions enabling the one or more microsystems 200 to register (through the control plane 300) their associated microservices 400 at the external resource registry of the external system 10.

The control plane 300 may be formed as a, for the chiplet arrangement 100, centralized control plane and will generally be described as such. However, it should be emphasized that the present disclosure is applicable also, without limitation, to decentralized or distributed implementations of the control plane 300.

To exemplify the functionality of the control plane; the control plane 300 may be configured to discover and manage available hardware resources 112 and microsystems 200. This implies monitoring resource usage and availability, as well as allocating and deallocating resources as needed. The control plane 300 may, additionally, or alternatively, be configured to deploy and manage microservices 400 on the available hardware resources 112 by associated microsystem 200. This implies ensuring that each microservice 400 is deployed to an appropriate location and that it may communicate with other microservices 400 as needed. The control plane 300 may, additionally, or alternatively, be configured to provide service scaling. That is to say, as demand for a particular microservice 400 increases or decreases, the control plane 300 may be configured to scale the microservice 400 up or down accordingly. This may involve adding or removing instances of the microservice 400, and/or adjusting the microsystem allocated to each instance of the microservice 400. The control plane 300 may, additionally, or alternatively, be configured to provide health monitoring of the chiplet arrangement 100. This may comprise monitoring health of each microservice 400, and/or microsystem 200 and to detecting and advantageously respond to failures or other issues as they arise. This may involve performing automated health checks, restarting failed microsystems 200 and/or microservices 400 and/or triggering alert notifications when issues occur. The control plane 300 may, additionally, or alternatively, be configured to manage updates to the microservices 400 and/or microsystems 200, in order to ensure that new versions of the services are deployed and rolled out in a controlled and safe manner.

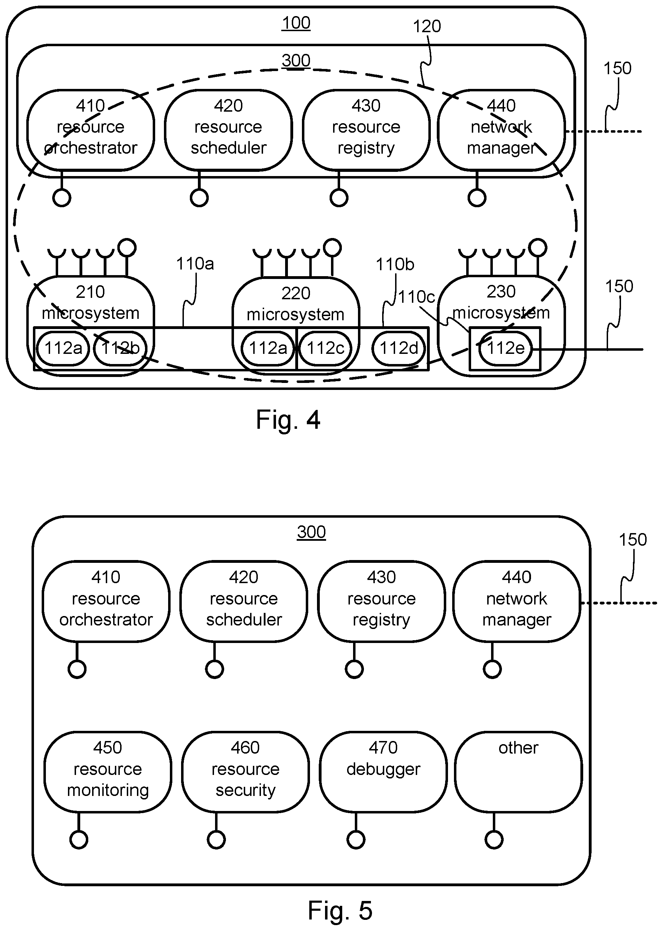

Using an SOA approach in providing the control plane 300, the control plane 300 may be created by a set of microsystems 200 with associated microservices 400. This is schematically shown in Fig. 4. It may be assumed that the control plane 300 is instantiated and executed locally at each chiplet arrangement 100.

With reference to Fig. 4, an exemplary embodiment of a chiplet arrangement 100 comprising an advantageous control plane 300 will be presented. In Fig. 4, the control plane 300 comprises a resource orchestrator 410. The resource orchestrator 410 may be configured for orchestrating and coordinating the integration and instantiation of microsystems 200 and their produced and consumed microservices 400. A microsystem integration may be requested through the resource orchestrator 410 exposed as an associated microservice 410 at the external communications interface 150. Such integration requests may indicate which hardware resources 112 of the chiplet arrangement 100 to integrate and, if applicable, provide any suitable microsystem executable code. In addition, lifetime data ranging from the completion of the first service request to a maximum lifetime may be provided. The maximum lifetime may be determined by e.g. edge or cloud-located ServiceRegistry and SystemRegistry to which the microsystem may have to register. If necessary advanced security on-boarding schema may be deployed, this will be further explained in later sections. It should be mentioned that microsystems 200 of the chiplet arrangement 100 are not necessarily static. That is to say, the microsystems 200 may be formed in a static structure, a dynamic structure, a fluid structure, a flexible layout, an evolving compositions or combinations thereof. Orchestration of microsystems 200 may be dynamically renewed, updated, or changed through new requests to the resource orchestrator 410. The resource orchestrator may provide orchestration information to a network manager 440 of the control plane 300. This may be provided in order to configure suitable communication between integrated hardware resources 112. A service integration request will generally integrate and instantiate a microsystem 200 composed of a set of prescribed hardware resources 112 e.g. CPU, Timer, Memory, ADC, etc.

The resource orchestrator 410 may comprise a preconfigured microsystem 200 of the chiplet arrangement 200 associated with one or more preconfigured microservices 410 of the chiplet arrangement 100. That is to say, the resource orchestrator may be preconfigured. In Fig. 4, the resource orchestrator 410 is shown as a microservice 400. The skilled person will understand that this microservice 410 is associated with a specific microsystem 200. The microservice 400 will be exposed by the control plane 300 and the control plane 300 will provide an interface between the microservice 400 and a specific microsystem 200.

In Fig. 4 the control plane 300 is shown further comprising a resource scheduler 420. The resource scheduler 420 may be provided to ensure a timely availability of a desired microsystem 200. Scheduling of the hardware resources is advantageous in order to achieve a requested performance and obtain a maximum benefit out of a potential of the chiplet arrangement 100. The resource scheduler is advantageously configured to balance a strict real-time requirement with other types of priorities and/or policies. The skilled person will appreciate that such scheduling is dependent on application strategies, policies regulations, etc. A wide range of such scheduling algorithms are available and have been previously published¹ (references in footnote is hereby incorporated in full to give context to the embodiments of this disclosure). From this, resource scheduling may be considered an engineering optimization problem and will not be further detailed in the present disclosure.
¹ S. Singh and I. Chana, "A survey on resource scheduling in cloud computing: Issues and challenges," Journal of Grid Computing, no. DOI 10.1007/s10723-015-9359-2, pp. 217-264, 2016. Z.-H. ZHAN, X.-F. LIU, Y.-J. GONG, J. ZHANG, H. S.-H. CHUNG, and Y. LI, "Cloud computing resource scheduling and a survey of its evolutionary approaches," ACM Computing Surveys, vol. 47, no. 4, July 2015. M. Kumar, S. C. Sharma, A. Goel, and S. P. Singh, "A comprehensive survey for scheduling techniques in cloud computing," Journal of Network and Computer Applications, vol. 143, pp. 1-33, 2019.

It should be mentioned that the resource scheduler 420 may reside either internally or externally to the chiplet arrangement 100. In Fig. 4, the resource scheduler 420 is shown as internal to the chiplet arrangement 100 but this is one alternative, and other implementations may be considered depending on application.

As for the resource orchestrator 410, the resource scheduler 420 may be preconfigured. In Fig. 4, the resource scheduler 420 is shown as a microservice 400, but the skilled person will understand that this microservice 400 is associated with a specific microsystem 200.

The exemplary control plane 300 in Fig. 4 comprises a resource registry 430. The resource registry 430 may be configured to store data pertaining to the hardware resources 112 of the chiplet arrangement 100. Advantageously, the data comprises information indicating one or more of a resource ID of each hardware resource 112, a physical address of each hardware resource 112 of the chiplet arrangement 100 and/or an electrical address of each hardware resource 112 of the chiplet arrangement 100. The resource registry may comprise further data associated with hardware resources of the chiplet arrangement 100, such as resource specification, configurations data and/or meta data. This data is generally generated at design time and advantageously deployed to the resource registry 430 at a chiplet production time. It should be mentioned that the resource registry 430 is not required to comprise data associated with all hardware resources 112 of the chiplet arrangement 100.

In the chiplet arrangement 100 of Fig. 4, the control plane 300 further comprises a network manager 440. The network manager 440 is advantageously configured to dynamically configure network connections of the chiplet arrangement 100. That is to say, the network manager 440 is configured to create communication channels suitable for the microsystems 200 of the chiplet arrangement. The network manager 440 may be configured to interface with a variety of bus technologies, such as, but not limited to, PCI or UCIe. The network manager 440 may further be configured to communicate with a variety of components (hardware resources 112, internal communications interface 120, external communications interface 150 etc.) of the chiplet arrangement 100. Advantageously, each chiplet 110 and instantiated microsystem 200 are identified at the external communications interface 150 exposing their associated microservices 400. The network manager is advantageously configured to ensure efficient and reliable communication between internal devices of the chiplet arrangement 100 and between internal devices of the chiplet arrangement 100 and devices external to the chiplet arrangement 100. This may involve measures such as implementation of efficient protocols for transmitting data over the internal communications interface 120, minimizing latency, and/or maximizing bandwidth. Further to this, implementation of error correction mechanisms, flow control mechanisms, and mechanisms for handling errors and exceptions may be provided in order to increase efficiency and reliability in communication.

As for the resource orchestrator 410, the network manager 440 may be preconfigured. The microservice 400 will be exposed by the control plane 300 and the control plane 300 will provide an interface between the microservice 400 and a specific microsystem 200. This is illustrated in Fig. 4 by the network manager 440 (the microservice 400 of the control plane) provide an external communications interface 150 on an application level (dotted line in Fig. 4). The physical connection of the external communications interface 150 is provided by a suitable hardware resource 112e which is comprised in a microsystem 230 (solid line in Fig. 4). In Fig. 4, the network manager 440 is shown as a microservice 400, but the skilled person will understand that this microservice 440 is associated with a specific microsystem 200.

The chiplet arrangement 100 of Fig. 4 is an exemplary chiplet arrangement 100 and the features described in reference to Fig. 4 are optional and may be freely combined with each other or any other features described herein.

It should be mentioned that the control plane 300 and/or the microservices 400, 410, 420, 430, 440 may be pre-configured and/or be instantiated or re-configured based on e.g. time scheduling or events.

With reference to Fig. 5, some further exemplary microservices 400 will be presented. In Fig. 5, the control plane 300 of the chiplet arrangement 100 comprises a resource monitor 450 associated with a specific microsystem 200 (not shown in Fig. 5). The resource monitor 450 may be configured to capture a status of a large variety of hardware resources 112 and their current and/or specified capabilities. Consequently, status types and capability types are advantageously part of the metadata registered for each hardware resource 112 in the resource registry 430. The transfer of such status data may be provided by electrical communication or/and through a monitoring microservice request. The resource monitor 450 may be configured to provide access to historical data. Historical data may be accessed in order to proceed with e.g., predictive maintenance, optimization etc. Advantageously, the historical data is available only for a limited time, generally determined by a capacity of a storage in relation to an amount of historic data that is generated. The resource monitor 450 advantageously resides in the chiplet arrangement 100 in order to enable appropriate monitoring of its hardware resources 112.

In Fig. 5, the control plane 300 of the chiplet arrangement 100 further comprise a resource security microservice 460 (labeled "resource security" in Fig. 5 for brevity) associated with a specific microsystem 200 (not shown in Fig. 5). Generally, some form of security is advantageous in most applications. Dependent on application requirements and hardware capabilities chiplet security measures of interest may comprise one or more of physical tampering detection, encryption of data transferred over the chiplet electrical communication (internal communications interface 120 etc.), secure on-boarding of software, enabling e.g. over the air (OTA) software updates, secure on-boarding of hardware, etc. Such security issue detection and actions are advantageously initiated and monitored by the resource security microservice 460. Advantageously, any available security issue detection and action types offered by the resource security microservice 460 may form part of the metadata registered in the resource registry 430.

In Fig. 5, the control plane 300 of the chiplet arrangement 100 further comprises a debugger 470 with an associated microsystem 200 (not shown in Fig. 5). The debugger 470 is advantageous in order to support e.g. test and validation of the chiplet arrangement 100, the control plane 300 and instantiated microsystems 200. The debugger 470 may be configured to trace the execution of software instructions in real-time, allowing developers to identify potential issues with hardware access, timing, and/or synchronization. The debugger 470 may be configured to monitor memory access in real-time, allowing developers to detect and diagnose issues with memory corruption, buffer overflows, or other memory-related issues. The debugger 470 may be configured to inspect values of hardware registers of one or more hardware resources 112 in real-time (runtime), allowing developers to diagnose issues related to hardware configuration or control. The debugger 470 may be configured to set breakpoints and/or watch points at specific points in program instructions or at memory addresses, allowing developers to halt execution and inspect the system state at critical points. The debugger 470 may be configured to provide detailed performance profiling information, allowing developers to identify performance bottlenecks and optimize code for better hardware utilization.

As mentioned, the above exemplified microservices 400 and associated microsystems 200 are provided for explanatory purposes and should in no way be construed as limiting. As indicated in Fig. 5, the control plane 300 may very well comprise other microservices 480 (labeled "other services" in Fig. 5 for brevity) with associated microsystems 200. The examples presented in reference to e.g. Figs. 4 and 5 may be freely combined with each other.

### DYNAMIC INSTANTIATION

Generally, dynamic instantiation refers to an ability to create and configure instances of a design or component during run-time. In the present disclosure and associated architecture, it refers to an ability to dynamically create and configure instances of microsystems 200. The use of dynamic instantiation will allow for flexibility and scalability in system design, as it allows for the creation of customized microsystems 200 on demand and may further reduce costs by allowing for the reuse of existing chiplets 110. To this end, the chiplet arrangement 100 is advantageously configurable to host one or several microsystems 200. Each microsystem 200 is configured to produce and/or consume one or more microservices 400. Advantageously, such microsystems 200 are configured to instantiate dynamically during run-time. To enable such instantiating the chiplet arrangement 100 may be configured to expose its hardware resources 112 and their allocation to integrated microsystems and their current usage status/availability.

Consequently, in order to instantiate a microsystem 200, the chiplet arrangement 100 is advantageously configured to, in run-time (throughout a lifetime of the chiplet arrangement 100), dynamically integrate the chiplets 110 and necessary program instructions to form microsystems 200 and associated produced and/or consumed microservices 400 of the microsystems 200. In addition, the architecture allows for the usage of resources allocated to microsystems that are not in operation. This is provided by the control plane 300 of the present disclosure.

Microservices 400 may be exposed on the internal communications interface 120 and/or the external communications interface 150 through the network manager 440. The network manager 440 is advantageously configured to provide the chiplet arrangement 100 with an IP address making it reachable at the external communications interface 150. The network manager 440 is advantageously configured to provide capabilities to also communicate locally with other chiplets 110 in the same chiplet arrangement 100. The control plane 300 allows the orchestration and registry of the microservices 200. The control plane 300 is based on SOA principles; a well-established technology which, therefore, is only briefly covered here.

System of Systems (SoS) functionality refers to collective behavior and capabilities of a group of interconnected software systems, which together form a larger, more complex system. SoS functionality is concerned with how these individual systems work together to achieve a common goal or set of goals, and how they communicate and share information in order to achieve this. This comprises issues such as interoperability, data exchange, and system integration. SoS functionality is generally important in large-scale software systems, where multiple independent systems need to work together in order to achieve a common objective. As the skilled person appreciates, effective SoS functionality requires careful design and planning, as well as robust communication protocols and system interfaces to ensure that each system is able to interact effectively with the others.

To integrate the chiplet arrangement 100 into a SoS functionality, the foundational look-up, loosely coupled and late binding properties of the SOA are advantageously supported by the SoS functionality. Eclipse Arrowhead architecture is a commonly known SOA architecture example and reference implementation that may provide a basic control plane meeting SOA principles like look-up, late binding, loose coupling, and security measures e.g. authentication, authorization, etc., and optional security measures, interoperability measures etc. As an example, the basic control plane capabilities are provided in the Eclipse Arrowhead architecture reference implementation by the mandatory/highly recommended microsystems ServiceRegistry system (look-up), Orchestration system (late binding, loosely coupled) and Authorisation system (authorization, authentication). The SoS functionality may provide these features by (based on Eclipse Arrowhead terminology):
- a ServiceRegistry and an associated ServiceDiscovery microservice
- an Orchestration system and its associated Orchestration microservice, i.e. the resource orchestrator 410 and its associated microsystem 200.
- AA security (Authenticating, Authorisation) may be provided by an Authorization system and an associated microservice GetPublicKey.
- Additional control plane 300 services like e.g. on-boarding security, interoperability translators and adaptors, workflow management and execution² (reference in footnote is hereby incorporated in full to give context to the embodiments of this disclosure), autonomous SoS maintenance and re-engineering³ (reference in footnote is hereby incorporated in full to give context to the embodiments of this disclosure).
² "Workflow management solutions based on microservices," Applied Sciences. ³ A. N. Lam, O. Haugen, and J. Delsing, "Dynamical orchestration and configuration services in industrial iot systems: An autonomic approach," IEEE Open Journal of the Industrial Electronics Society, vol. 3, pp. 128-145, 2022.

The incredible flexibility of a chiplet arrangement 100 as presented above, may present challenges for developers seeking to take advantage of this flexibility. For instance, late binding, i.e. association of resources at runtime rather than compile time, and loosely coupled services, i.e. individual components or modules operate independently and have little or no dependencies on each other, from a software perspective is well know. But when late binding and loosely coupled services are applied also to hardware as in the chiplet arrangement 100 presented herein, modeling, optimization, verification and validation of microsystems 200 (i.e. hardware/software combinations) becomes challenging.

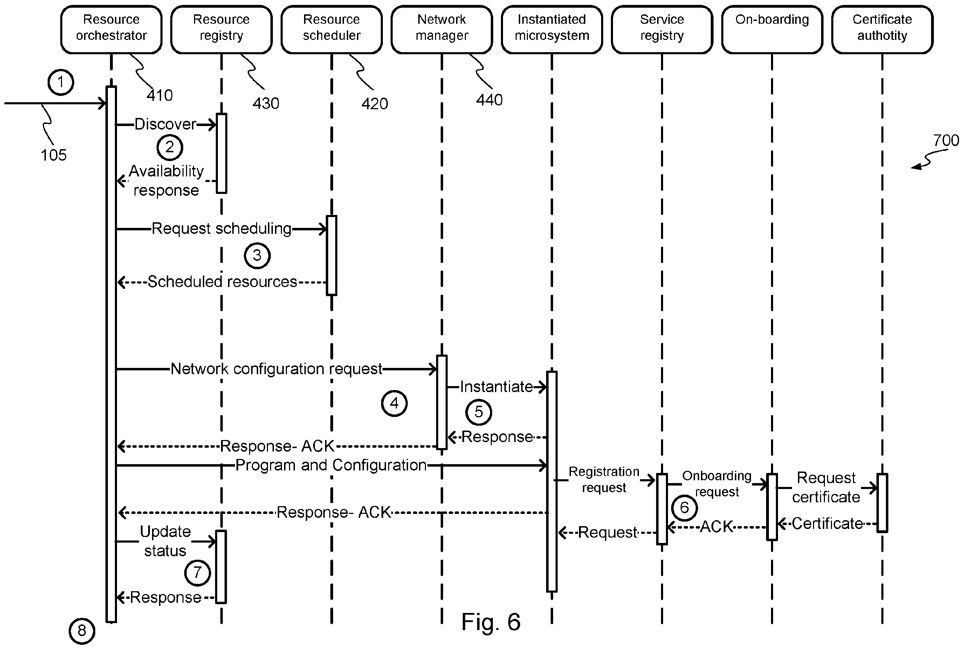

With reference to Fig. 6, an exemplary process 700 of dynamic instantiation of a microsystem will be explained. Fig. 6 shows a Systems Modeling Language (SysML) sequence diagram. As is known to the skilled person, a SysML diagram is a type of diagram that shows the interactions between system components or actors over time. In Fig. 6, interactions between system components or actors are shown as a series of events, with arrows indicating the flow of control between them. The events are organized along a timeline, with time progressing from top to bottom. The sequence is started by obtaining an integration request, this is indicated by the arrow at the upper left corner of Fig. 6. The process 700 will be explained in the following.
(1) The resource orchestrator 410 receives the service request with a microsystem recipe 105. The microsystem recipe 105 comprises data required to instantiate a new microsystem 200 and its microservice 400. Such data may be indicative of e.g. scheduling conditions, program instructions, configuration parameters, policies, a security certificate etc.
(2) The resource orchestrator 410 queries the resource registry 430 for available hardware resources 112 that match the microsystem recipe 105. The resource orchestrator 410 examines the list of the resources available and selects the ones that fulfill the requirements for that specific microsystem recipe 105. This portion of the process is provided to ensure that the selected hardware resources 112 are available and meet the requirements of the microsystem recipe 105, thereby making possible their composability.
(3) After determining a selection of hardware resources 112 that will conform to the requirements of the microsystem recipe 105, the resource orchestrator 410 requests to the resource scheduler 420 the assignation of scheduled time and slots. This may comprise tasks such as resource scheduling, prioritization, etc.
(4) The result of the operations of the resource scheduler 420 provide microsystem deployment data. The microsystem deployment data is provided to the network manager 440. The network manager 440 is configured to, based on the microsystem deployment data, deploy a communication integration between the orchestrated hardware resources 112 and commence execution of the instantiated microsystem 200. This deployment will be configured to last for the lifetime requested in the resource recipe.
(5) The microsystem 200 may be deployed responsive to the resources being configured with the parameters indicated in the microsystem recipe 105 and the program instructions are executed by a processing circuit (hardware resource 112 in the form of a processing circuit). Advantageously, the deployment is performed responsive to the hardware resources 112 have been scheduled and the chiplet network 120 has been set up for them.
(6) The instantiated microsystem 200 is advantageously tested before being determined to be ready for use. Tests may be performed in order to ensure that overall operation of the microsystem is in accordant with the service request and microsystem recipe 105.
(7) If the test results are positive, the microsystem 200 is set and a registry update is sent to the resource registry 430 to list and store the information about the microsystem 200, microservices instances, and the hardware resources 112 used for this task.
(8) Responsive the microsystem 200 being on-boarded, microservice operation may start.

As exemplified with the process in Fig. 6, operation and utilization of a microsystem 200 may commence responsive to the deployed microsystem 200 reaching a stationary state. At the stationary state, the microsystem 200 is configured as required and provided with necessary software for use of the microsystem, Once the intended microsystem(s) 200 are instantiated, the microservice(s) 400 associated with the microsystem(s) 200 are exposed on the external communications interface 150 and/or the chiplet network 120 and available for use. From the above, an architecture that enables hardware capabilities to be exposed as a set of microservices 400 that may be dynamically updated and extended given current needs of the chiplet arrangement 100. The operation of the available microservices 400 may comprise management of a number of dimensions, such as functionality, security, maintenance, evolution, reengineering and deployment.

### MICROSYSTEM MODELLING

The inventors behind the present disclosure have identified this challenge and the following sections will provide a method for simulating (modeling) a requested service on a chiplet arrangement 100. The simulation may be utilized to provide a microsystem 200 for deployment on the chiplet arrangement 100. The simulation may be utilized to validate the hardware and/or software functionality of the requested service. The simulation may be utilized to optimize an implementation (i.e. the associated microsystem 200) of the requested service from a hardware and/or software perspective. The simulation may be utilized to determine a utilization and/or a workload the requested service adds to the chiplet arrangement 100. It should be mentioned that, although the method will be explained in a context of a requested service, the teachings may be amended and adapted also for other context such as simulation or optimization of a chiplet arrangement 100 hosting one or more microsystems 200.

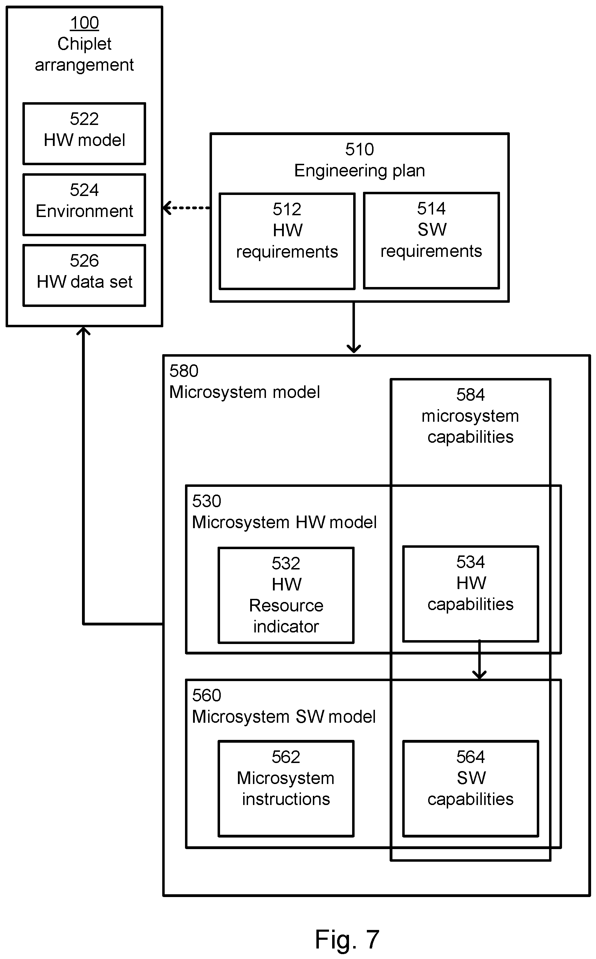

In Fig. 7, a simplified block diagram of providing a microsystem model 580 from a specific chiplet arrangement 100 is shown. The overview given with reference to Fig. 7 is an introduction to providing the microsystem model 580 and each step and feature will be further explained in coming sections. The flow is initiated by an engineering plan 510. The engineering plan 510 may be obtained as part of a service request. The engineering plan 510 specifies requirements of a service requested from the specific chiplet arrangement 100. In some examples, the engineering plan 510 specifies a services demanded by a user/operator of a chiplet arrangement 100. The specified service is a service that, assuming requirements are met, will be deployed and served on the specific chiplet arrangemen 100. The requested service may be anything suitable for the chiplet arrangement 100 such as obtaining a temperature at specific intervals, identifying persons in video images, controlling a heating system based on a provided AI model, implementing autonomous drive in a vehicle etc. Based on the engineering plan 510, a microsystem hardware model 530 is provided. The microsystem hardware model 530 specifies one or more hardware resources 112, e.g. specific chiplets 110 of the chiplet arrangement 100 required for providing the requested service, or advantageously required hardware services. To this end, the microsystem hardware model 530 comprises a hardware resource indicator 532 indicating what hardware resources 112 or hardware services of the chiplet arrangement 110 the microsystem hardware model 530 comprises models of. The hardware resource indicator 532 may indicate specific hardware resources 112, but advantageously, to wholly enable dynamic instantiation of microsystems 200, the hardware resource indicator 532 indicate hardware services. For instance, if the service is identifying persons in video images, an image obtaining hardware resource, a processing hardware resource and a memory hardware resource may be required and specified by the hardware resource indicator 532. These microsystem hardware resources 112 may be from the same chiplet 110 or from different chiplets 110. The microsystem hardware model 530 is simulated using hardware simulation tools and the outcome of this simulation provides one or more hardware capabilities 534 of the microsystem hardware model 530. The hardware capabilities 534 are used to estimate a microsystem software model 560. The microsystem software model 560 comprises microsystem program instructions 562 (labeled "microsystem instructions" in Fig. 7 for brevity). The microsystem software model 560 is simulated on an environment 524 of the chiplet arrangement 100. Based on these simulations, a microsystem model 580 is provided. The microsystem model 580 comprises the microsystem hardware model 520, the microsystem software 560 and one or more microsystem capabilities 584 based on the hardware and software capabilities 534, 564, resulting from the simulations of the respective models 530, 560.

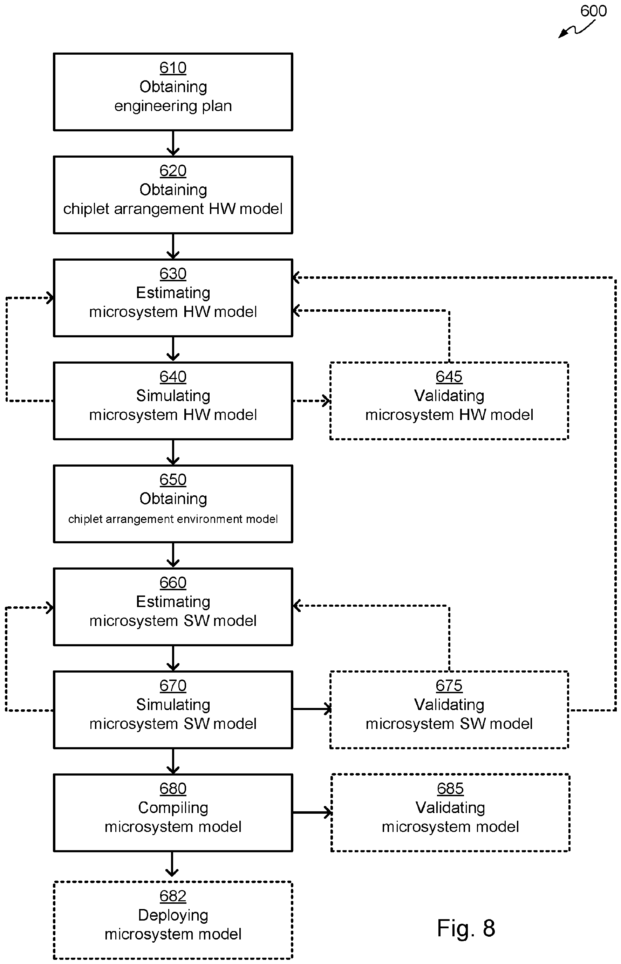

In Fig. 8, an exemplary method 600 according to the present disclosure is shown. The method 600 shown in Fig. 8 may be implemented as a computer implemented method or a partly computer implemented method where some tasks are wholly or partly performed manually. It should be mentioned that many of the features mentioned in reference to the method 600 are optional.

The method 600 comprises obtaining 610 the previously mentioned engineering plan 510. The service requested may be defined by specifying a functionality of the service, interfaces of the service, and how it interacts with other components, services and devices. The requested service may be described in broad, functional terms such as "control the ambient temperature within 1 % of a set value" but such broadly requested services will require some processing in order to provide an engineering plan 510. As mentioned, the engineering plan 510 generally comprises hardware requirements 512 and software requirements 514. Although the method 600 will be described with an engineering plan 510 comprising both software requirements 514 and hardware requirements 512, it should be mentioned that some services may be definable with solely hardware requirements 512 or software requirements 514. After reading the present disclosure, the skilled person will be clear on how to adjust the method 600 for only hardware requirements 512 or only software requirements 514 and this disclosure should not be construed as limited to hardware requirements 512 in combination with software requirements 514.

The engineering plan 510 and associated hardware requirements 512 and software requirements 514 describe, at some level, a functionality and requirements of a specific microsystem 200 for producing and/or consuming one or more microservices 400.

The engineering plan 510 may be obtained in any suitable way, compiled in any suitable format, but comprise at least an indication of a service requested by a specific chiplet arrangement 100. The engineering plan 510 is generally provided by a user, and advantageously considers chiplet resources and the desired functionality. The engineering plan may comprise specifications, code, configurations, and optionally test cases.

The hardware requirements 512 may be formatted freely and generally depend on the service (microservice 400) and/or functionality defined by the engineering plan 510. In some examples, the hardware requirements 512 may be provided in an XML or similar formats, but any data set suitable for describing parameters and limits may be utilized. There are many commonly known formats for defining software requirements 514 that may be employed in defining the DW requirements 514 such as, but not limited to, Service Description Language (SDL), Interface Definition Language (IDL), RESTful API Documentation, YAMI, or JSON Config Files, Domain-Specific Languages (DSLs) etc.

The hardware requirement 512 may provide requirements for any suitable hardware related parameter. In some examples, the hardware requirement 512 may be broken down into a set of hardware constraints. The constraints may comprise physical constraints, connectivity constraints, availability constraints etc. The physical constraints may comprise constraints relating to one or more of a physical size, a power consumption, a heat dissipation, manufacturing capabilities of the chiplets etc. The connectivity constraints may comprise constraints relating to one or more of a bandwidth, a latency, a reliability of inter-chiplet connections, a supply voltage, a supply current, etc. The availability constraints may comprise constraints relating to one or more of an availability and/or allocation of hardware resources such as, but not limited to, processing cores, memory blocks, I/O interfaces etc.

Correspondingly, the software requirements 514 may provide requirements for any suitable software related parameter. In some examples, the software requirement 514 may be broken down into a set of software constraints. The constraints may comprise one or more of compatibility constraints, performance constraints, security constraint etc. The compatibility constraints may be provided to ensure software compatibility with the hardware. The compatibility constraints may comprise constraints relating to one or more of instruction set architecture (ISA), memory access patterns, I/O protocols etc. The performance constraints may comprise constraints relating to one or more of processing speed, memory usage, overall efficiency etc. The security constraints may comprise constraints relating to one or more of secure boot, encryption, secure communication protocols etc.

The method 600 further comprises obtaining 620 a chiplet arrangement hardware model 522. The chiplet arrangement hardware model 522 is a model of the chiplets 110 of the chiplet arrangement 100. The chiplet arrangement hardware model 522 is not required to comprise hardware models of all chiplets 110 of the chiplet arrangement 100, it may suffice to obtain a chiplet arrangement hardware model 522 comprising hardware models of chiplets 110 deemed necessary to fulfill the engineering plan 510. Further to this, not all chiplets 110 of the chiplet arrangement 100 that are part of the chiplet arrangement hardware model 522 need to be modeled with the same accuracy. For instance, some chiplets 110 may be modeled as simple black boxes with e.g. impedances at ports while other chiplets 110 may be more accurately modeled with details of traces, components (e.g. semiconductors, passives etc.) or their respective physical locations.

The chiplet arrangement hardware model 522 describes an electrical environment of at least a part of the chiplet arrangement 100. The electrical environment may relate to any conditions and/or factors that influence the behavior and performance of electric circuitry of the chiplet arrangement 100, i.e. of the chiplets 110 and/or their interconnection. The electrical environment may comprise any suitable elements within and/or around the chiplet arrangement 100 that may impact operation of the chiplet arrangement 100. Non-limiting examples of data that the electrical environment may describe are voltage sources (presence and characteristics of voltage sources, such as voltage levels, waveforms, etc.), current sources (presence and characteristics of current sources, such as magnitude, direction, etc.), resistors, capacitors, inductances, circuit resistances, circuit capacitances (e.g. time constants), circuit inductances, operating frequencies, temperature, noise, interferences, etc.

The chiplet arrangement hardware model 522 may be provided in any suitable format and different chiplets 110 of the chiplet arrangement 100 may be modeled differently. In some examples, one or more chiplets 110 or parts of chiplets 110 may be modeled as Simulation Program with Integrated Circuit Emphasis (SPICE) models. Additionally, or alternatively, one or more chiplets 110 or parts of chiplets 110 may be modeled as FEM-models for electromagnetic simulations. Additionally, or alternatively, one or more chiplets 110 or parts of chiplets 110 may be modeled as system level simulink models. Additionally, or alternatively, one or more chiplets 110 or parts of chiplets 110 may be modeled as models for Quite Universal Circuit Simulator (Qucs). Additionally, or alternatively, one or more chiplets 110 or parts of chiplets 110 may be modeled as HSPICE models. Additionally, or alternatively, one or more chiplets 110 or parts of chiplets 110 may be modeled as models for OpenModelica.

As mentioned, the type of model(s) provided by the chiplet arrangement hardware model 522 may depend on the engineering plan 510. The type of model(s) provided by the chiplet arrangement hardware model 522 may, additionally or alternatively, depend on requirements relating to accuracy of the microsystem model 680, time requirements for preparing the microsystem model 680, processing requirements for preparing the microsystem model 680, etc.

The method 600 further comprises estimating 630 a microsystem hardware model 530. The microsystem hardware model 530 is estimated based on the engineering plan 510, and advantageously, if available, the hardware requirements 512 of the engineering plan 510 but also software requirements of the engineering plan 510, and a hardware data set 526 of the chiplet arrangement 100. The hardware data set 526 specifies hardware resources 112 of the chiplet arrangement 100, i.e. lists what hardware the chiplet arrangement 100 comprises. The hardware resources 112 listed in the hardware data set 526 may correspond to those hardware resources 112 in the resource registry 430. However, advantageously, the hardware data set 526 is a wider definition of hardware resources 112 not limited to those currently available to the control plane 300 of the chiplet arrangement 100. In some examples, the microsystem hardware model 522 and the microsystem hardware data set 526 describe the same or corresponding hardware resources 112 of the chiplet arrangement 100.

The microsystem hardware model 530 details (to a level) what specific hardware resources 112 of the chiplet arrangement 100 that the microsystem model 580 may require. The microsystem hardware model 530 may be estimated by mapping the hardware requirements 512 to hardware resources 112 of the chiplet arrangement 100. The microsystem hardware model 530 may be estimated by manually, automatically, or a combination thereof, picking specific hardware resources 112 of the hardware data set 526 that fulfill the hardware requirements 512. To exemplify, estimating the microsystem hardware model 530 may comprise selecting specific processing circuitry of the chiplet arrangement 100, specific persistent and non-persistent storage circuitry of the chiplet arrangement 100 and specific sensor circuitry of the chiplet arrangement 100. In some examples, estimating the microsystem hardware model 530 may comprise selecting one specific chiplet 110 of the chiplet arrangement 100 comprising hardware resources 112 in the form of suitable processing circuitry, suitable storage circuitry and suitable sensor circuitry. The microsystem hardware model 530 consequently comprises models of the hardware resources 112 relevant for the engineering plan 510, optionally including affected hardware resources 112 not directly connected to the hardware resources 112 relevant for the engineering plan 510.

As the microsystem hardware model 530 is estimated based on the engineering plan 510, the microsystem hardware model 530 may not only specify the actual hardware resources 112 that the microsystem model 580 will use, but also further hardware resources 112 that may be electrically affected by the added service of the engineering plan 510. This may include crosstalk between hardware resources 112, ripple induced or injected on supply lines etc.

It should me mentioned that in examples wherein one or more chiplets 110 of the chiplet arrangement 100 comprise configurable hardware, such as FPGAs and/or CPLDs, the hardware model 530 may be configured to specify configurations of the configurable hardware.

Specific chiplet arrangements 100 and/or specific hardware resources 112 may be manually (or automatically) selected as an initial microsystem hardware model 530. As will be explained in coming sections, the microsystem hardware model 530 may be iteratively selected and/or several microsystem hardware models 530 may be estimated.

The method 600 further comprises simulating 640 the estimated microsystem hardware model 530. The simulation is consequently a simulation of a hardware environment of the chiplet arrangement 100 and may be described as an electrical simulation or a hardware simulation. The hardware simulation may be provided using any suitable simulation tool or simulation tools. The hardware simulation is not necessarily provided by one simulation using one hardware simulation tool since different hardware simulation tools and methodologies may be adapted to simulate different aspects of the hardware.

The simulation may be performed by obtaining relevant hardware models from the chiplet arrangement hardware model 522 based on the microsystem hardware model 530. Depending on a desired accuracy of the simulation, the simulation may be expanded to not only include hardware resources 112 specified by the microsystem hardware resource indicator 532, but also further hardware resources 112 affected by those hardware resources 112 specified by the microsystem hardware resource indicator 532. To this end, and depending on a desired accuracy of the microsystem model 580, the hardware simulation may further comprise hardware resources 112 physically proximal to the hardware resources 112 specified by the microsystem hardware resource indicator 532.

The different hardware models from the chiplet arrangement hardware model 522 may be modeled together using e.g. virtual prototyping tools and techniques. Virtual prototyping allows creation of a functional software model of a system (the microsystem hardware model 530), which can be used for e.g. simulation and testing. Some non-limiting examples of virtual prototyping tools comprise Synopsys Virtualizer for creating virtual prototypes of systems, including those with microcontrollers and ASICs, and Cadence Virtual System Platform for creating virtual prototypes for system-level simulation and software development.

As mentioned, the hardware simulation may be performed using any suitable tool and is advantageously aligned with the hardware models obtained from the chiplet arrangement hardware model 522. Simulating 640 the microsystem hardware model 530 may comprise SPICE simulations. SPICE simulates behavior of electronic circuits, such as resistors, capacitors, inductors, transistors, and other components. Additionally, or alternatively, simulating 640 the microsystem hardware model 530 may comprise FEM simulations. FEM simulations enable modelling of complex geometries and simulation of electromagnetic fields, antennas, RF components, crosstalk etc. Simulating 640 the microsystem hardware model 530 may comprise HSPICE simulations. HSPICE simulations are commonly used for circuit simulations, especially in the field of semiconductor device modeling. For instance in case of Hardware Description Language (HDL) Simulators for FPGA, ModelSim or Vivado may be configured to simulate VHDL/Verilog code. In case of simulators for ASICs (including RFIC and MMIC), suites such as Cadence or Synopsys may be employed. In case of microcontroller Simulators, e.g. Arduino, may be simulated using tools like Proteus or simulators within the Arduino IDE. Microprocessor simulators may be simulated using QEMU or other high-level simulators.

The above simulation tools are given as examples, and further electrical simulation tools such as, PLECS, HOMER Pro, OrCAD PSpice, Sonnet, ADS (Advanced Design System) by Keysight, Proteus, NI Multisim, EMTP-RV (Electromagnetic Transients Program), PowerWorld Simulator, Tanner Tools (Tanner EDA), Xyce, QuickField, TINA-TI (Texas Instruments), Elmer, SaberRD (Saber), etc. are well within the scope of the present disclosure. The skilled person will know which simulation tool(s) are suitable depending on application and/or purpose.

If more than one hardware simulation tool is utilized, co-simulation may be employed. Co-simulation involves the use of multiple simulation tools in parallel, where each tool simulates a part of the system. During the simulation, the hardware simulation tools exchange data. In order to allow sharing of data between the hardware simulation tools, a data exchange service is generally provided. The data exchange service may be a service using Inter-Process Communication (IPC), network sockets, or file-based communication for data exchange between different simulation tools.

Outputs from the hardware simulation may vary depending on the type of simulation performed and specific goals of the simulation. The output from the hardware simulation may be exemplified by, but not limited to: waveforms e.g. time-domain waveforms (voltage and/or current waveforms over time) or frequency-domain waveforms (signals represented in frequency domain); AC and/or DC analysis results e.g. steady-state analysis (information about behavior of circuitry at a stable state, may include DC operating points) or AC analysis (frequency response, gain, phase shift, and other AC characteristics); transient analysis results e.g. transient response (behavior over time in response to changes, such as input signal transitions) or rise and fall times (slew rate, duration for signals to transition between specific voltage levels); S-Parameters (Scattering parameters that describe how electrical signals are scattered or transmitted through a network); power dissipation and/or loss analysis (information about power consumption, dissipation, and losses in various components of the circuit); harmonic analysis (identification and analysis of harmonic components in signals); thermal analysis results (information regarding temperature distribution and thermal behavior) etc. The simulation result may be comprise results from software sweeping one or more parameters of the microsystem hardware model 530 and/or statistical measures of the simulated data.

The outputs from the hardware simulation are processed to obtain one or more hardware capabilities 534. The hardware capabilities 534 generally comprise data corresponding, at least to a degree, to the hardware requirements 512. That is to say, if the hardware requirements 512 specify a maximum current consumption, the hardware capabilities 534 advantageously comprise data indicating a maximum current consumption of the microsystem hardware model 530. The hardware capabilities 534 may comprise more or fewer hardware metrics than the hardware requirements 512.

Optionally, in some examples, the method 600 may comprise validating 645 the microsystem hardware model 530. Validation of the microsystem hardware model 530 may comprise determining whether the hardware capabilities 534 provided by the hardware simulation meet requirements specified in the engineering plan 510. In examples wherein the engineering plan comprises one or more test cases, the validation of the microsystem hardware model 530 advantageously comprises determining whether the microsystem hardware model 530 passes the one or more test cases or not. A result of the validation of the microsystem hardware model 530 may be provided as hardware validation data.

In some examples, the method 600 may comprise repeating the estimating 630 of the microsystem hardware model 530 if the microsystem hardware model 530 fails the validation. In such examples, one or more alternative microsystem hardware models 530 may be estimated 630 and simulated 640 based on the microsystem hardware capabilities 534 of the initial microsystem hardware model. This will provide alternative microsystem hardware capabilities 534 that in turn may be validated 645 to determine whether they meet the requirements of the engineering plan 510 or not.

Additionally, or alternatively, the method 600 may comprise providing one or more alternative microsystem hardware models 530 regardless of validation of the microsystem hardware model 530 (if performed).

Due to the general flexibility of a chiplet arrangement 100 in the allocating hardware resources 112 for a microsystem 200, the above iterative approach enables several different hardware configuration to be evaluated. This makes it possible to select a microsystem hardware model 530 that best meet certain requirements. To this end, even if no validation is performed, several different microsystem hardware models 530 may be estimated and simulated. The hardware capabilities 534 may be compared to optimize on certain design parameters for the chiplet arrangement 100 such as current consumption, heat dissipation etc.

Regardless if an iterative approach is adopted or not, the method 600 comprises obtaining 650 a chiplet arrangement environment model 524 of the chiplet arrangement 100 and deployed software. The chiplet arrangement environment model 524 may describe a software environment of the chiplet arrangement 100 in any suitable way. The chiplet arrangement environment model 524 may comprise a software software design description. In some examples, the chiplet arrangement environment model 524 is a digital twin of the chiplet arrangement 100. The chiplet arrangement environment model 524 will be further explained in reference to Fig. 8.

The method 600 further comprises estimating 660 a microsystem software model 560 based the hardware capabilities 534 and the software requirements 514. The microsystem software model 560 comprises the produced and/or consumed microservices 400 of the microsystem 200. The microsystem software model 560 may be modeled, in e.g. SysML, UML, Modelica, Matlab, etc. Advantageously, the microsystem software model 560 is modeled to a level of detail that enables machine generation of microsystem program instructions 562, i.e. program code. The microsystem program instructions 562 are configured to control the hardware resources 112 of the chiplet arrangement 100 indicated by the hardware resource indicator 532. The microsystem program instructions 562 are, in some examples, configured to control the hardware resources 112 of the chiplet arrangement 100 to provide the service specified in the engineering plan 510.

It should me mentioned that in examples wherein one or more chiplets 110 of the chiplet arrangement 100 comprise configurable hardware, such as FPGAs and/or CPLDs, the software model 560 may be configured to model configurations of the configurable hardware.

The method 600 further comprises simulating 670 the estimated microsystem software model 560. Based on the microsystem software model 560, the specific microsystem 200 and associated services (produced and/or consumed microservices 400) may be manually or automatically coded to executable code. Thereby, microsystem 200 functionality simulation and validation may be made on any hardware including hardware similar (with regards to e.g. CPU, memory, I/O etc.) to hardware of the intended chiplet arrangement 100. Such validation may be made using containers, Virtual Machine (VM), Docker, Kubernetis or other approaches and tools. Simulation of the microsystem software model 560 may be based on the chiplet arrangement environment model 524 and the microsystem software model 560. To exemplify, in some examples, the chiplet arrangement environment model 524 may be a physical chiplet arrangement 100 having deployed thereon a software environment. In such examples, simulating the microsystem software model 560 may comprise executing the estimated microsystem program instructions 562 on the chiplet arrangement 100. In some examples, a chiplet arrangement 100 may not be physically available and in those cases, simulating the microsystem software model 560 may comprise executing the estimated microsystem program instructions 562 on hardware similar to that of the chiplet arrangement running a software similar to software specified by the chiplet arrangement environment model 524.

The output(s) from the software simulation are processed to obtain one or more software capabilities 564. The software capabilities 564 may be any suitable capability covering any suitable capability within any suitable applications and specific needs within any field including real time control, state machine execution, etc. Some non-limiting exemplary software capabilities 564 comprise data filtering and/or analytics, application of AI/ML algorithms to data, clustering of data using AI/ML, signal processing of various kinds, digital control, closed loop control, workflow management, event handling, interrupt handling, functionality, QoS, status estimation/reporting, monitoring, resilience monitoring and/or mitigation, etc. The software capabilities 564 generally comprise data corresponding, at least to a degree, to the software requirements 514. That is to say, if the software requirements 514 specify a maximum memory usage, the software capabilities 564 advantageously comprise data indicating a maximum memory consumption of the microsystem software model 560. The software capabilities 564 may comprise more or fewer software metrics than the software requirements 514.

Optionally and corresponding to the microsystem hardware model 530, in some examples, the method 600 may comprise validating 675 the microsystem software model 560. Validation of the microsystem software model 560 may comprises determining whether the software capabilities 564 provided by the software simulation meet requirements specified in the engineering plan 510. In examples wherein the engineering plan comprise one or more test cases, the validation of the microsystem software model 560 advantageously comprise determining whether the microsystem software model 560 passes the one or more test cases or not. A result of the validation of the microsystem software model 560 may be provided as software validation data.

In some examples, the method 600 may comprise repeating the estimating 660 of the microsystem software model 560 if the microsystem software model 560 fails the validation. In such examples, one or more alternative microsystem software models 560 may be estimated 630 and simulated 640 based on the microsystem software capabilities 564 of the initial microsystem software model 560. This will provide alternative microsystem software capabilities 564 that in turn may be validated 675 to determine whether they meet the requirements of the engineering plan 510 or not.

Additionally, or alternatively, the method 600 may comprise repeating the estimating 630 of the microsystem hardware model 530 if the microsystem software model 560 fails the validation. As outlined above, this means that a fault in validation of the microsystem software model 560 may cause estimation of an alternative microsystem hardware model 530.

Additionally, or alternatively, the method 600 may comprise providing one or more alternative microsystem software models 560 regardless of validation of the microsystem software model 560 (if performed).

The above iterative approach enables several different microsystem software models 560 each based on respectively different microsystem hardware models 530 and/or comprising respectively different microsystem program instructions 562. This allows for selection of a microsystem software models 560 that best meets certain requirements. To this end, even if no validation is performed, several different microsystem software models 560 may be estimated and simulated. The software capabilities 564 may be compared to optimize on certain design parameters for the chiplet arrangement 100 such as current memory utilization, latency, bandwidth, etc.

The method 600 further comprises compiling 680 the microsystem hardware model 530 with associated hardware capabilities 534 and the microsystem software model 560 with associated software capabilities as a microsystem model 580 comprising microsystem capabilities 584. Compiling 680 may comprise one or more of a lexical analysis, a syntax analysis, a semantic analysis, code generation, etc. of the microsystem hardware model 530 with associated hardware capabilities 534 and the microsystem software model 560 with associated software capabilities. The output microsystem model 580 comprising microsystem capabilities 584 may be in a format that is configured for deployment on the chiplet arrangement 100. In some examples, the compiling 680 may be described as integrating the microsystem hardware model 530 with associated hardware capabilities 534 and microsystem software model 560 with associated software capabilities into a microsystem model 580 comprising microsystem capabilities 584. The compiling and integrating may be used interchangeably and the choice of word will generally depend on the format and levels of the microsystem hardware model 530, the microsystem software model 560, the microsystem model 580, the hardware capabilities 534, the software capabilities and the microsystem capabilities 584.

Optionally, in some examples, the method 600 may comprise validating 685 the microsystem model 580. Validation of the microsystem model 580 may comprise validating the effect that the microsystem model 580 has on the chiplet arrangement 100. Validating the microsystem model 580 may comprise determining a utilization of hardware resources 112 of the chiplet arrangement 100. In some examples, validating the microsystem model 580 may comprise determining a change in utilization of hardware resources 112 of the chiplet arrangement 100 with and without the microsystem model 580.

Although not indicated in Fig. 8, the compiling 680 of the microsystem model 580 may also be iterative, either based on validation 685 outcome or not, such that alternative microsystem models 580 may be provided based on alternative microsystem hardware models 530 and/or alternative microsystem software models 560.

It should be mentioned that, validation 685 of the microsystem model 580 may result in the engineering plan 510 having to be reworked, and/or a different chiplet arrangement 100 being targeted with the engineering plan 510. This is also applicable if the validation 645 of the microsystem hardware model 530 or the validation 675 of the software model 560 fails.

Optionally, in some examples, the method 600 may comprise deploying 682 the microsystem model 580 on the chiplet arrangement 100. Deployment of the microsystem model 580 on the chiplet arrangement 100 may be provided in accordance with the process 700 introduced in reference to Fig. 6.

The features of the method 600 have been explained in a specific order for the sake of explanation. The different features of the method 600 may be performed in any suitable order and several of the features may be performed in parallel.

The method 600 described herein allows for modeling of a microsystem 200 for a specific chiplet arrangement 100. In some examples, the method 600 may further provide a validated microsystem 200, with regards to hardware and/or software validated, for a specific chiplet arrangement 100. In some examples, the method 600 may provide, based on the engineering plan 510, a microsystem 200 adapted with regards to hardware and/or software for a specific chiplet arrangement 100.

The microsystem model 580 may be described as the microsystem recipe that may dynamically instantiated on a chiplet arrangement 100 at runtime. As indicated above, dynamic allocation of resources for the instantiation of more than one microsystem 200 at runtime is possible due to the combined use of the resource scheduler 420 and network manager 440. As explained above, during design time, shared usage of a given resource for two microsystems 200 may be simulated and optionally tested and/or validated. However, there may be certain limitations in terms of network availability and latency. To exemplify, assume a microsystem A that uses resource 1 and 2 and microsystem B that uses resource 2 and 3. If the microsystems do not need to use the resource 2 continuously, time slots may be used to schedule when the resource 2 will be available for the microsystems A and B. The network needs to be configured according to this schedule and changed at runtime. In the same way, for a given microsystem 200, the allocation of a resource may be changed and updated at runtime, if the hardware and software limitations allow it. The method 600 presented in reference to Fig. 8 allows for simulation of such complex functioning and may provide feasibility of the given microsystem 200.

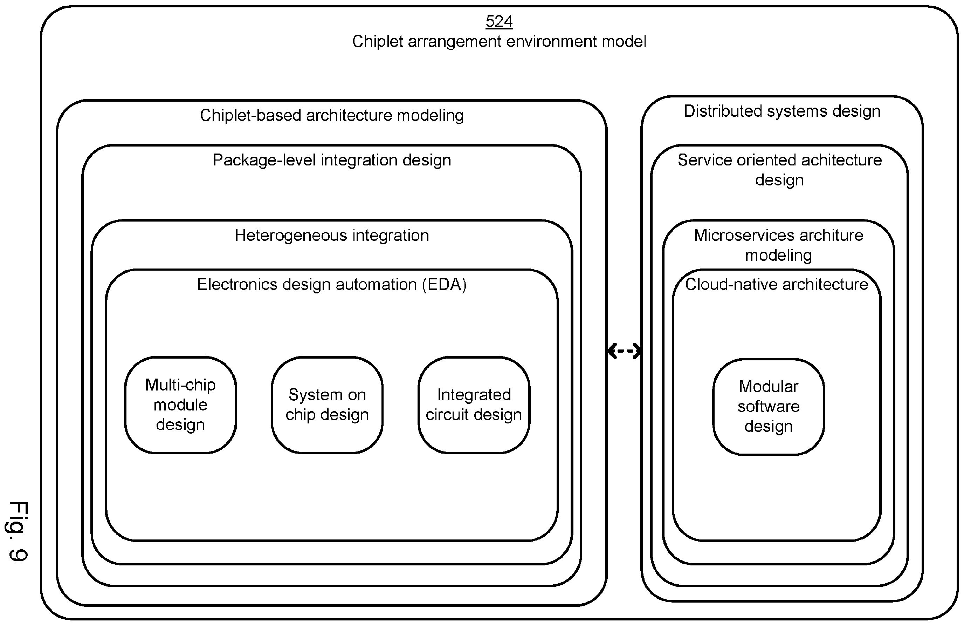

In Fig. 9, an exemplary software architecture of a chiplet arrangement environment model 524 is shown. The chiplet arrangement environment model 524 in Fig. 9 is one non-limiting example and is provided to present a conceptual idea of some hierarchies of the chiplet arrangement environment model 524. The hierarchies in Fig. 9 are hierarchies known to the skilled person and each hierarchy will only be briefly and generally explained. Although the hierarchies are described in an order, any one or more of the hierarchies may be left out without affecting other hierarchies. In Fig. 9, the chiplet arrangement environment model 524 comprises models of both the hardware and the software that are coupled.

The hardware models may be described by chiplet-based architecture modeling that may comprise package-level integration design, that may comprise heterogeneous integration that may comprise electronic design automation (EDA) that may comprise one or more of multi-chip module design, system on chip (SoC) design or integrated circuit (IC) design. Package-level integration design may refer to a process of designing and organizing integration of various hardware components within a system at package level. A package, in this context, is a higher-level abstraction that encapsulates multiple hardware components, such as integrated circuits, modules, or subsystems, into a cohesive unit. Package-level integration design may involve defining structures, connectivity, and interfaces at a higher level of abstraction. Heterogeneous Integration may refer to design and integration of diverse types of components, technologies, or materials within a single hardware system. This approach may involve combining various elements with different properties, functionalities, or manufacturing processes to achieve improved overall system performance or capabilities. EDA is a category of software tools that may be used for designing and modeling electronic systems and integrated circuits (ICs). EDA tools are generally utilized throughout an entire electronic design process, from conceptualization and schematic capture to simulation, layout, and verification. These tools facilitate the efficient design, analysis, and manufacturing of electronic systems.

Corresponding to the hierarchical view of the hardware, the software models may be described by a distributed system design that may comprise SOA design, that may comprise microservices architecture modeling, that may comprise cloud-native architecture that may comprise modular software design. SOA design is an architectural approach that structures software applications as a collection of services. As mentioned, in SOA, services are self-contained, loosely coupled, and independent modules that encapsulate a specific business functionality. These services communicate with each other over generally well-defined, standardized interfaces. One goal of SOA is to enhance flexibility, scalability, and maintainability by promoting a modular and reusable design. Microservices architecture modeling may involve designing and representing a software system based on the principles of microservices architecture. As mentioned, microservices are an architectural style that structures an application as a collection of small, independent services, each focused on a specific business capability. These services are designed to be loosely coupled, independently deployable, and scalable. Modeling a system using microservices architecture involves various aspects that capture the structure, communication, and behavior of the individual services. Cloud-native architecture is an approach to designing and building software applications that leverage capabilities and advantages of cloud computing platforms. It may be characterized by principles that enable applications to fully exploit the dynamic, scalable, and distributed nature of cloud environments. Modeling software using a cloud-native architecture involves considering various aspects that align with cloud-native principles. Modular software design is an approach that may involve breaking down a software system into smaller, independent, and interchangeable modules or components. Each module encapsulates a specific set of functionalities, and these modules interact with each other through well-defined interfaces. The goal of modular design is to enhance maintainability, reusability, and flexibility in software development. Modeling software with a modular design involves various aspects that focus on the organization, communication, and interaction between these discrete software modules.

### LIFECYCLE

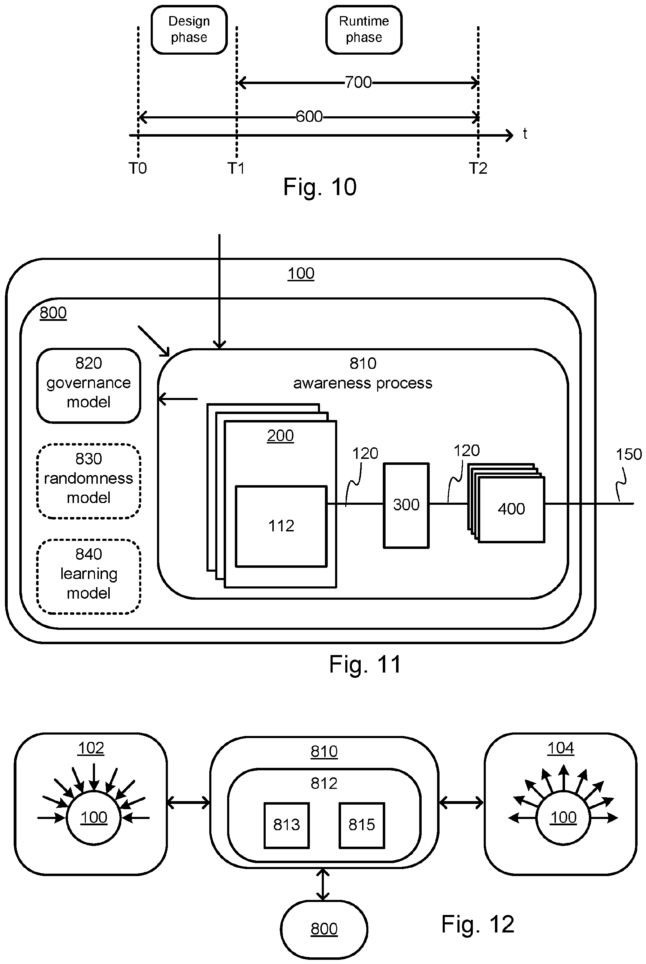

Based on the teaching provided herein, an architectural and functional implementation of providing a truly reconfigurable hardware system at run-time is presented. To emphasize this, a lifecycle of a chiplet arrangement 100 is shown in Fig. 10. At a starting point T0 in time, design of the chiplet arrangement 100 is initiated. The starting point T0 may be defined by a first conceptual idea of the chiplet arrangement 100, a problem statement, a first proof of concept etc. A design phase of the chiplet arrangement lasts from the starting point T0 to a first point T1 in time. The design phase may be referred to as design time. At the end of the design time, the hardware of the chiplet arrangement 100 is set and the chiplet arrangement 100 is at a runtime phase (runtime for short) until an end of the lifecycle at a second point T2 in time. As shown in Fig. 10, the process 700 of dynamic instantiation of a microsystem 200 may be performed at any time during runtime. That is to say, a microsystem 200 may be dynamically instantiated at any point in time during runtime of the chiplet arrangement 100. Further, the method 600 of providing a microsystem model introduced with reference to Fig. 8 may be performed at any point in time during the lifecycle of the chiplet arrangement 100. That is to say, the method 600 may be performed at design time, and/or at runtime. The control plane 300 introduced in Fig. 3 enables self-configuration of hardware and software components of the chiplet arrangement 100. The method 600 introduced in reference to Fig. 7 and 8 enables optimization of the system and ensures interoperability and performed prior to deployment at runtime.

### HUMAN PLASTICITY

The inventors behind the present disclosure has realized that this form of reconfiguration at runtime may be compared to the plasticity of the human brain. The biological brain of humans and other animals has a capability referred to as neuroplasticity, also known as neural plasticity, or brain plasticity. It is the ability of neural networks in the brain to change through growth and reorganization. It is when the brain is rewired to function in some way that differs from how it previously functioned^{4,5} (references in footnote are hereby incorporated in full to give context to the aspects and embodiments of this disclosure). Biological plasticity is generally categorized in two distinct types, structural plasticity and functional plasticity.
⁴ M. Costandi, Neuroplasticity, ser. MIT Press essential knowledge series. Cambridge, Massachusetts: The MIT Press Cambridge, Massachusetts, 2016.
⁵ P. Lucassen, E. Fuchs, and G. Flügge, "Adult neuroplasticity: More than 40 years of research," Neural Plasticity, vol. 2014, p. 541870, 2014. [Online]. Available: https://doi.org/10.1155/2014/541870

Structural plasticity is generally understood as the brain's ability to change its neuron computational capabilities. This is accomplished by the brain changing neuron connections and integrating new neurons into the central nervous system and/or bypassing/excluding neurons (e.g. damaged tissue) from the central nervous system⁶ (references in footnote are hereby incorporated in full to give context to the aspects and embodiments of this disclosure).
⁶ P. Mateos-Aparicio and A. Rodr'iguez-Moreno, "The impact of studying brain plasticity," Frontiers in Cellular Neuroscience, vol. 13, 2019. [Online]. Available: https://www.frontiersin.org/articles/10.3389/fncel. 2019.00066

Functional plasticity on the other hand, refers to the brain's ability to alter and adapt the functional properties of neurons. Functional plasticity is generally defined as occuring in four different ways namely homologous area adaptation, map expansion, cross- model reassignment, and compensatory masquerade^{7,8} (references in footnote are hereby incorporated in full to give context to the embodiments of this disclosure).
⁷ J. Grafman, "Conceptualizing functional neuroplasticity," Journal of Communication Disorders, vol. 33, no. 4, pp. 345-356, 2000. [Online]. Available: https://www.sciencedirect.com/science/article/pii/ S0021992400000307 ⁸ W. J. Freed, L. de Medinaceli, and R. J. Wyatt, "Promoting functional plasticity in the damaged nervous system," Science, vol. 227, no. 4694, pp. 1544-1552, 1985. [Online]. Available: https://www.science.org/doi/abs/10.1126/science.3975624

Consequently, structural and functional plasticity may be provided by the chiplet arrangement 100 and control plane 300 presented herein.

However, neuron or brain plasticity, structural and/or functional, is an autonomous process. This autonomous process is guided by fundamental biological drives such as avoiding danger, obtaining energy/food and reproduction. Based on these drives, plasticity processes are initiated and executed without external commanding.

### MACHINE PLASTICITY

The inventors of the present disclosure have invented an architecture and a method that allows autonomous plasticity to be brought to machines.

With reference to Fig. 11, autonomous structural and functional plasticity from a hardware, or hardware and software, will be presented. In Fig. 11, a chiplet arrangement 100 according to the present disclosure is show, but the teachings are applicable to any device or system (the chiplet arrangement 100 of the present disclosure, a computer system, or any other suitable device, circuitry or system) configured with a control plane 300 as presented herein. This autonomous plasticity is provided by a plasticity plane 800 of the chiplet arrangement 100.

As will be described in greater detail in the following, the plasticity plane 800 is configured to identity an opportunity for reconfiguration of one or more microsystems 200 of the chiplet arrangement 100. The reconfiguration may comprise removal of one or more microsystems 200, addition of one or more microsystems 200 and/or modification of one or more microsystems 200. Modification of microsystems 200 may involve directly modifying a microsystem 200, or replacing the microsystem 200. If the opportunity for reconfiguration of microsystems 200 indicates changes to, or additions or microsystems 200, the plasticity plane 800 may, using e.g. the method 600 introduced in reference to Fig. 8, obtain a microsystem for deployment by the control plane 300. The opportunity for reconfiguration may in other words result in an engineering plan 510 associated with an updated or new microsystem 200.

By configuring the plasticity plane 800 with an awareness process 810, the chiplet arrangement 100 may adapt itself by, autonomously introduce, update or remove microsystems 200 orchestrated by the control plane 300. In order so drive improvements, changes or other modifications to the microsystems 200, the plasticity plane 800 is provided with a governance model 820.

### AWARENESS CAPABILITY

The awareness process 810, schematically shown in Fig. 12, provides the placticity plane 800 with information, data and/or understanding of an environment 102, 104 of, or otherwise associated with, the chiplet arrangement 100. The environment 102, 104 of the chiplet arrangement 100 may be an internal environment 102 of the chiplet arrangement 100 and/or an external environment 104 of the chiplet arrangement 100. The internal environment 102 refers to data of an environment inside, or internal to, the chiplet arrangement 100. The external environment refers to data of an environment outside, or external to, the chiplet arrangement 100. The internal environment 102 relate to internal hardware and/or software data, functionality, operating conditions etc. of the chiplet arrangement 100. The internal environment 102 may comprise any or all chiplets 110, hardware resources 112, internal communications interfaces 120, control plane 300, microsystems 200, microservices 400 etc. of the chiplet arrangement 100. The external environment 104 relates to external hardware and/or software data, functionality, operating conditions etc. of the chiplet arrangement 100. The external environment 104 may comprise any or all devices, functionality and/or services connected to external communications interfaces 150 and their surrounding environments.

Information, data and/or understanding from the internal and/or external environment 102, 104 is obtained, provided to, measured or otherwise acquired by the awareness process 810. Said information, data and/or understanding from the internal and/or external environment 102, 104 may be referred to as awareness data 812. The awareness process 810 may provide awareness data 812 indicating events associated with the environment 102, 104 of the chiplet arrangement 100. These events may be changes (additions, removals, modifications) of e.g. physical and/or virtual structures in the environment 102, 104 of the chiplet arrangement 100. Alternatively, or additionally, the awareness process 810 may provide awareness data 812 indicating existence of devices, objects, services, functions etc. in environment of the chiplet arrangement 100.

The awareness process 810 may be described as providing a comprehension and/or perception of a current state (internal environment 102) of the chiplet arrangement 100 and/or surroundings (external environment 104) of the chiplet arrangement 100. Furthermore, the awareness process 810 may provide an in-depth understanding of a current status of the chiplet arrangement 100 such as, but not limited to, awareness data 812 associated with resources, schedules, network, microsystems 200, microservices 400 etc., of the chiplet arrangement 100. It should be mentioned that the awareness process 810 may be configured to provide awareness data 812 not only relating to a current status of the internal and/or external environment 102, 104 of the chiplet arrangement 100. In some examples, the awareness process 810 may be configured to provide monitoring of signals and processes of the environment 102, 104 of the chiplet arrangement 100. Monitoring signals and processes of the environment 102, 104 of the chiplet arrangement 100 provides data and information from previous states and situations enabling continuous learning. This allows the plasticity plane 800 to utilize awareness data 812 from previous states and situations which data may be utilized to address events, reconfigure resources, and structure them accordingly.

It should be mentioned that the awareness process 810 and/or the plasticity plane 800, may advantageously incorporate one or more artificial intelligence (AI) techniques for predictive analytics of current and/or historical awareness data 812. Some non-limiting or exhaustive examples of predictive AI techniques configurable to provide predictive analysis are linear regression, logistic regression, decision trees, random forest, gradient boosting machines (GBM), recurrent neural networks (RNN), long sort-term memory (LSTM) networks and support vector machines (SVM). predictive AI techniques enables the plasticity plane 800, and thereby the chiplet arrangement 100, to anticipate future operational requirements and constraints. Integration of data-driven insights not only empowers the chiplet arrangement 100 to adapt dynamically to changing circumstances but also enhances an overall efficiency and responsiveness. Consequently, fusion of runtime data analysis and predictive analytics provides a potent foundation for the autonomous evolution and optimization of architectural frameworks. The concept of continuous learning of the plasticity plane will be further explained in coming sections.

In some examples, the awareness data 812 comprise functional awareness data 813. The functional awareness data 813 may refer to an understanding or data associated with specific features and/or capabilities that the chiplet arrangement provides. The functional awareness data 813 refers to what the chiplet arrangement 100 does, its functionalities, and how the chiplet arrangement 100 interact with its internal and/or external environments 102, 104 to accomplish goals and/or purposes of the chiplet arrangement 100. This may comprise awareness of a basic, or intended, functionality of the chiplet arrangement 100, its use cases, and the expected outcomes of various operations. In some examples, the functional awareness data 813 may describe or otherwise define a change in a functional characteristic of the chiplet arrangement 100. Such a change may comprises a change (addition, removal or modification) in a hardware resource 112 of the chiplet arrangement 100.

In some examples, the awareness data 812 comprise non-functional awareness data 815. The non-functional awareness data 815 may pertain to understanding or data associated with qualities or characteristics of the chiplet arrangement 100 beyond basic functionalities of the chiplet arrangement 100. The non-functional awareness data 815 may relate to aspects such as performance, reliability, scalability, security, and usability. The non-functional awareness data 815 may define how well the chiplet arrangement performs its functions rather than what functions it performs (functional awareness data 813). The non-functional awareness data 815 may be provided in considerations of constraints, limitations, quality attributes etc. In some examples, the non-functional awareness data 815 may describe, or otherwise define, a change in a non-functional characteristic of the chiplet arrangement 100 such as a change in performance, reliability, security, and/or usability of the chiplet arrangement 100. The change in a non-functional characteristic of the chiplet arrangement 100 may comprises a change in a resource utilization of the chiplet arrangement 100.

### GOVERNANCE CAPABILITY

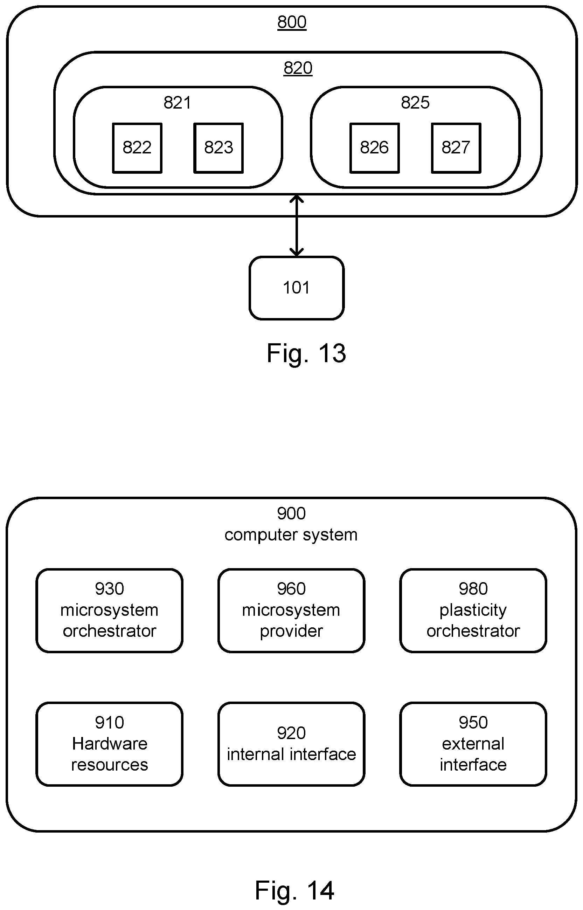

The governance model 820 of the plasticity plane will be further explained with reference to Fig. 13. Generally, governance from a software, hardware, and/or computer system perspective refers to a set of policies, procedures, and practices put in place to ensure that operation, management, and maintenance of software, hardware, and systems align with goals, purposes, regulations, and best practices associated with the software, hardware, and/or computer system. Governance models for service oriented architecture is known and has been discussed at a high level in literature already before 2015^{9,10} (references in footnote is hereby incorporated in full to give context to the embodiments of this disclosure). The governance model 820 of the plasticity plane may be described in similar terms, but also from a perspective of determining opportunities of reconfiguration of one or more microsystems 200 at the chiplet arrangement 100. The governance model 820 defines boundaries within which changes induced by the plasticity plane 820 can be accepted. The governance model 820 may be described as a model configured to orchestrate development, deployment, and/or maintenance of microsystems 200 of the chiplet arrangement 100. The governance model 820 may be described as an oversight mechanism configured to harness an inherent plasticity of the chiplet arrangement 100 and orchestrate a harmonious response to new conditions through the enforcement of thoughtfully crafted policies while ensuring that an operational purpose 101 of the chiplet arrangement is met.
⁹ M. Niemann, J. Eckert, N. Repp, and R. Steinmetz, "Towards a generic governance model for service oriented architectures," AMCIS 2008 Proceedings, p. 361, 2008.
¹⁰ [17] F. Daniel, F. Casati, V. D'Andrea, E. Mulo, U. Zdun, S. Dustdar, S. Strauch, D. Schumm, F. Leymann, S. Sebahi, F. de Marchi, and M.S. Hacid, "Business compliance governance in service-oriented architectures" in 2009 International Conference on Advanced Information Networking and Applications, 2009, pp. 113-120

An operational purpose 101 of a chiplet arrangement 100 defines a purpose of a specific chiplet arrangement 100. Physically identical chiplet arrangements 100 may, at production, be configured with identical control planes 300 and plasticity planes 800, but configured with different operational purposes 101 when entering a market or being installed/deployed at an environment. The operational purpose 101 will define within what boundaries the governance model 820 is permitted to determine opportunities for reconfiguration of microsystems 200. Any change in the operational purpose 101 of the chiplet arrangement 100 is generally originating from outside and may exemplified by e.g. the chiplet arrangement 100 being moved to a different environment, or a building automation system being further tasked with controlling a temperature of an indoor pool. The operational purpose 101 may define specific operational objectives of the chiplet arrangement 100. The operational objective of a chiplet arrangement 100 may refer to a specific goal or target that the chiplet arrangement 100 is expected to achieve within an intended operational context. The operational objective defines a purpose or function that the chiplet arrangement 100 is intended to fulfill and provides direction for use and performance of the chiplet arrangement 100. The operational objectives are provided to guide the design, development, deployment, and maintenance provided by the governance model 820 to ensure that reconfiguration of the microsystems 200 meets needs and/or requirements placed upon the chiplet arrangement 100. Additionally, or alternatively, the operational purpose 101 may define specific operational requirements for the chiplet arrangement 100. Such operational requirements may be exemplified by specific protocols for communication, minimum drive currents, etc. Additionally, or alternatively, the operational purpose 101 may define operational boundaries for the chiplet arrangement 100. The operational boundaries may refer to limits or constraints within which the chiplet arrangement 100 operates effectively and safely. These operational boundaries may define the range of conditions, parameters, or inputs that the chiplet arrangement 100 is able handle without compromising e.g. performance, reliability, safety, etc. In summary, depending on where (in what environment, to what purpose, etc.) the chiplet arrangement 100 is operating, the operational purpose 101 may differ.

To exemplify, if the chiplet arrangement 100 is forming a, or part of a, building automation system, the operational purpose 101 may comprise operational requirements, objectives and/or boundaries defining what is expected of the chiplet arrangement 100 in that specific building automation system. The operational objective may then for example specify that the chiplet arrangement should control a temperature of the building. This configures the plasticity plane 800, by e.g. the governance model 820, to ensure that control of the temperature of the building is never abandoned. To further exemplify, the operational purpose 101 may define operational requirements defining data required to control e.g. radiators and heat pumps or what are minimum and maximum allowable temperatures of the building. In a specific example, the operational purpose 101 may comprise one or more operational boundaries (e.g. Measurement value ∈ [-40, +120] else report outlier, actuator values ∈ [-90, +90] else report outlier, control set point X ± 5% etc.), one or more functional objectives (e.g. minimize energy consumption while meeting QoS, QoS: functional latency < 10ms, etc.), one or more security constraints (e.g. conform to security policy IDSx,y,z without violating ethical policy ID-Ea,b,c and/or safety policy ID-SAFEn,m.o, etc.) one or more legal frameworks (e.g. national laws/regulations of country where deployed, priority to the policy EMC directive, etc.), compliance with one of more standards (e.g. ISO-10303, ISO-12006, ISO-14066, ISO-26262, etc.).

It should be mentioned already now, that the governance model 820 may be a static model but is advantageously not a static mode. The governance model 820 may be described as a dynamic playbook that evolves, promoting an ability of the chiplet arrangement 100 to adapt swiftly and effectively to an unfolding landscape of technological and environmental changes as long as all adaptations are within the operational purpose 101 of the chiplet arrangement 100.

In short, the governance model 820 may be described by a set of diverse components comprising one or more decision-making frameworks e.g. algorithms and protocols that simulate a cognitive process, weighing various factors before making automated decisions that will shape an evolution of the chiplet arrangement 100. The governance model 820 may additionally, or alternatively, be described by components such as one or more ethical guidelines e.g. guidelines serving as the moral compass, configured to ensure that every adaptation, modification and decision upholds a configured standards of ethics, reflecting the values and norms applicable to the chiplet arrangement 100. The governance model 820 may additionally, or alternatively, be described by components such as one or more operational protocols e.g. a set of rules of an intricate game configured to define the "how" and "when" of operation of the chiplet arrangement 100 that may define parameters from e.g. routine functions to emergency responses. The governance model 820 may additionally, or alternatively, be described by components such as security policies, e.g. policies providing shields that safeguard the chiplet arrangement 100 against internal and external threats, ensuring integrity and trustworthiness in a landscape riddled with vulnerabilities. The governance model 820 may additionally, or alternatively, be described by components such as compliance standards, e.g., standards describing a legal framework, compliance standards ensure that adaptations of the chiplet arrangement 100 are within bounds of regulatory requirements.

It should be mentioned that the governance model 820 and the operational purpose 101 may be in conflict. To exemplify by a simple example, a specific chiplet arrangement 100 may be produced and marketed with a governance model 820 limiting (due to e.g. licensing etc.) use of the chiplet arrangement 100 to controlling ground based vehicles. If this chiplet arrangement would be placed in an aircraft, the operational purpose 101 may specify that an aircraft should be controlled, but in that case, any adaptation or reconfiguration of the microsystems 200 of the chiplet arrangement to control the aircraft will be prevented by the governance model 820. Similar examples may be made with regards to injuring people, geographical locations, etc.

As seen in Fig. 13, the governance model 820 may comprise an operational governance process 821 and/or governing boundary conditions 825.

The operational governance process 821 is concerned with governance of operation of the chiplet arrangement 100 and may refer to policies, procedures, practices, purposes, etc. that govern general operations of the chiplet arrangement 100. The operational governance process 821 is provided to ensure that operational functions, features and/or services of microsystems 200 are carried out efficiently, effectively and in alignment with the objectives, strategies, and/or values defined for the chiplet arrangement 100 by the operational purpose 101. The operational governance process 821 is provided to ensure that the chiplet arrangement 100 delivers an intended service, performs an intended activity and/or provides an intended functionality as specified by the operational purpose 101. The governance model 820 may be configured to determine the opportunity of reconfiguration of one or more microsystems 200 based on data provided by the operational governance process 821.

The operational governance process 821 may comprise a functional operational governance process 822 and/or a non-functional operational governance process 823. As the name implies, the functional operational governance process 822 is concerned with governance from a functional aspect of the chiplet arrangement 100 and the non-functional operational governance process 823 is concerned with governance from a non-functional aspect of the chiplet arrangement 100. The functional operational governance process 822 primarily focuses on overseeing and managing functional deliveries of specific microsystems 200 of the chiplet arrangement 100; ensurance that these deliveries align with core operations, functions and/or services that the chiplet arrangement 100 is configured to provide are generally governed by the governing boundary conditions 825. Such functional deliveries are advantageously indicated by the operational purpose 101 of the chiplet arrangement 100 and the governing boundary conditions 825 are within the operational purpose 101 of the chiplet arrangement 100. To exemplify, the functional operational governance process 822 may be configured to determine the opportunity of reconfiguration of microsystems 200 based on a change in the operational purpose 101 of the chiplet arrangement 100. Such a functional change may be a change in a timing requirement, temperature requirement, latency requirement, an energy consumption requirement, etc.

As mentioned, the operational non-functional operational governance process 823 corresponds to the functional operational governance process 822 but is concerned with the non-functional aspects of the chiplet arrangement 100. The non-functional operational governance process 823 primarily focuses on overseeing and managing non-functional deliveries of specific microsystems 200 of the chiplet arrangement to ensure that these deliveries align with the core operations, functions and/or services that the chiplet arrangement 100 is configured to provide. As before, such core operations, functions and/or services are advantageously indicated by the operational requirements 101 of the chiplet arrangement 100. To exemplify, the non-functional operational governance process 823 may be configured to determine the opportunity of reconfiguration of microsystems 200 based on a change in a non-functional operational purpose 101 of the chiplet arrangement 100. Such a non-functional change may be a change in a standard, performance requirement, reliability requirement, scalability requirement, security requirement, usability requirement etc.

As mentioned, the operational governance process 821 ensure that operational functions, features and/or services are carried out effectively and efficiently. The governing boundary conditions 825 is ensures that governing functions, features and/or services are in alignment with the objectives, strategies, and/or values defined for the chiplet arrangement 100. That is to say, the operational governance process 821 may ensure that a specific microsystem 200 meets a specific timing requirement on the internal communications interface 120, and the governing boundary conditions 825 ensures that a risk of blocking or congestion at the internal communications interface 120 is within some specified conditions. To this end, and corresponding to the operational governance process 821, the governing boundary conditions 825 may comprise a functional governing boundary condition 826 and/or a non-functional governing boundary condition 827.

The functional governing boundary condition 826 may comprise one or more physical boundary conditions (e.g., temperature of a chassis must never exceed a certain temperature), one or more functional objective (e.g., the laundry must be clean), non-functional objective (e.g., the current consumption should be minimized) and/or conditions relating to interaction with one or more internal and/or external microsystems 100 (e.g., specific protocols etc.) and their associated microservices 200. The governance model 820 may be configured to determine the opportunity of reconfiguration of microsystems 200 based on the functional governing boundary condition 826, such as violation of one or more functional governing boundary condition 826.

The non-functional governing boundary condition 827 may comprise one or more safety critical boundary condition (e.g., dialysis functionality must never be compromised), security boundary conditions (e.g., all outgoing data must be encrypted), ethical boundary condition (e.g., Isaac Asimov's laws of robotics¹¹) and/or ideological boundary condition (e.g., protect the weak). The governance model 820 may be configured to determine the opportunity of reconfiguration of microsystems 200 based on the non-functional governing boundary condition 827, such as violation of one or more non-functional governing boundary condition 827.
¹¹ Asimov, Isaac (1950). "Runaround"

In some examples, the operational governance process 821 is a, wholly, or in part, reconfigurable process. This implies that an opportunity of reconfiguration may in fact imply reconfiguration of the operational governance process 821. These reconfiguration may e.g. comprise changes relating to a maximum current consumption, an added requirement to provide data indicating an ambient light etc. There may be some parts of the operational governance process 821 that are static and excluded from reconfiguration. Additionally, or alternatively, in some examples, the governing boundary conditions 825 comprise one or more wholly, or in part, reconfigurable conditions. This implies that an opportunity of reconfiguration may in fact imply reconfiguration of one or more governing boundary conditions 825. In some examples, the governing boundary conditions 825 comprise one or more predetermined static conditions. In such examples, reconfiguration of any reconfigurable boundary conditions such that they violate one or more predetermined static conditions is advantageously prohibited.

The awareness process 810 and the governance model 820 presented enables a chiplet arrangement 100 (or other computer system) to adapt to changes in the internal and/or external environment 102, 104. In addition to this, it enables the implementing chiplet arrangement 100 or computer system to learn and improve over time to be e.g. more energy efficient. The awareness process 810 and the governance model 820 introduces a gradual change to the microsystems 200 of the chiplet arrangement 100, where each deployment may be seen as a new generation. This may be compared to natural selection or adaptation in evolution. However, the evolutionary concept of mutation on the other hand, introduces random variation by stochastic creation of new variants.

It should be mentioned already now that the term opportunity for reconfiguration used herein to indicate that a new or modified microsystem 200 may be proposed. Proposed in the sense that the new or modified microsystem 200 may fail the test and verification stipulated by e.g. the method 600 introduced in reference to Fig. 8 and or vetting based on the operational governance process 821 and/or the governing boundary conditions 825. The term "opportunity" in the phrase "opportunity for reconfiguration of microsystems 200" may be phrased as possibility prospect, potential, option, avenue or similar terms. Additionally, the term "reconfiguration" in the phrase "opportunity for reconfiguration of microsystems 200" may be phrased as re-orchestration, rearranging, restructuring, redesign, remodeling, adaptation, modification or similar terms.

As indicated in Fig. 11, the plasticity plane 800 may further comprise an optional randomness model 830. The randomness model 830 may be compared to the evolutionary concept of mutation. The randomness model 830 may be configured to provide direct mutation, i.e. the randomness model 830 may be configured to randomly determine an opportunity of reconfiguration of microsystems 200, e.g. provide an engineering plan 510 of a random microsystem 200. Additionally, or alternatively, the randomness model 830 may be configured to provide indirect mutation by randomly affecting the awareness data 812 to trigger the governance model 830 to determine presence of opportunities for updating of microsystems 200. The governance model 820 is provided to ensure that the random microsystem 200 is in conformance with relevant policies and the method 600 for providing a microsystem 200 for deployment will determine if the random microsystem 200 will function at the chiplet arrangement 100. In other words, these mutated microsystems 200 shall not be deployed unless they work as intended and their intended working area is line with those specified by the operational purpose 101 of the chiplet arrangement 100.

As mentioned, the plasticity plane 800 may be configured to improve and learn based on previous and present awareness data 812. To this end, the plasticity plane 800 may comprise a learning model 840. The learning model may be configured to provide selective, event based or, preferably continuous learning to the plasticity plane 800. This learning may be provided in any suitable form of machine learning (ML). As is known, ML is a branch of Al focused on creating algorithms that can learn patterns and make predictions from data without being explicitly programmed. ML for the learning model 840 of the plasticity plane 800 may comprise using previous and current awareness data 812 to train the learning model 840 and improve the plasticity plane 800 e.g., the awareness process 810 and/or the governance model 820. Based on the learning model 840, the plasticity plane 800 may be able to generalize and/or make improved predictions or decisions based on new awareness data 812. The learning model 840 enables the plasticity plane 800 to iteratively improve performance over time, the more awareness data 812 that is provided the better the learning model 840, allowing the plasticity plane 800 to adapt and make more accurate predictions and/or decisions.

ML models generally rely rather heavily on quality and quantity of data available. ML models may become overly complex and perform well on training data but fail to generalize to new, unseen data, leading to overfitting. Biased or incomplete data may lead to biased or inaccurate predictions. ML models may lack an ability to understand context or common sense reasoning, leading to errors in tasks requiring human-like understanding. Many of the risks of the learning model 840 may be mitigated, or even removed, by the governance model 820 and/or the operational purpose 101. However, it should be mentioned that the learning model 840 may be affected, influenced, steered or otherwise controlled by human interaction. Such control may be provided in order to enable a broader spectrum of learning for the learning model 840, learning at a higher speed, and reduce risks associated with ML models. In some examples, human interaction may be provided by an operator of the chiplet arrangement 100, changing, tuning or otherwise modifying the operational purpose 101 of the chiplet arrangement 100 to guide the governance model 820 and the learning model.

In Fig. 14, a schematic architecture of a computer system 900 is show. The computer system 900 may be any suitable computer system 900 configured to, or configurable to cater to any suitable need or purpose. The computer system 900 may comprise one or more, or be part of, or a combination of, personal computers (PC), servers (web hosting, file storage, email, database management, application hosting etc.), mainframe computers, supercomputers, embedded systems (specifically the chiplet arrangement 100 presented herein), smartphones, tables, wearable devices, internet of things (IOT) devices, gaming consoles, point-of-sales (POS) systems, networked devices, etc. The computer system comprises one or more hardware resources 910. The hardware resources 910 of the computer system 900 correspond, but adapted to the computer system 900, to the hardware resources 114 of the chiplet arrangement 100. Generally, the computer system 900 is configured to provide any feature, service or function embodied, exemplified of otherwise described herein. To this end, the computer system 900 may be configured with a microsystem orchestrator 930. The microsystem orchestrator 930 may be configured to provide any feature, service or function embodied, exemplified of otherwise described herein in reference to the control plane 300. Specifically, the microsystem orchestrator 930 may be configured to orchestrate one or more microsystems 200 (not indicated in Fig. 14), each microsystem 200 comprises at least one hardware resource 910 and an associated microservice 400 (not indicated in Fig. 14) that is addressable at an internal communications interface 920 and/or an external communications interface 950 of the computer system 900. The communications interfaces 920, 950 of the computer system 900 may be described analogously to the communications interfaces 120, 150 of the chiplet arrangement 100. The computer system 900 may further be provided with a plasticity provider 980. The plasticity provider 980 may be configured to provide any feature, service or function embodied, exemplified of otherwise described herein in reference to the plasticity plane 800. Further to this, the computer system 900 may comprise a microsystem provider 960. The microsystem provider 960 may be configured to provide any feature, service or function embodied, exemplified of otherwise described herein in reference to any of Figs. 7, 8 and/or 9 and specifically relating to the method 600 of providing a microsystem model 580.

To exemplify, at runtime, the plasticity provider 980 obtains awareness data 812, from e.g. the awareness process 810, indicating that one hardware resource 910, a persistent storage, is running out of free storage space. The plasticity provider 980, by e.g. the governance model 820, analyses the awareness data 812 and determines that another persistent storage has plenty of storage space left. However, the other persistent storage is dedicated for firmware upgrades and using if for other data is prohibited by e.g. a predetermined static non-functional governing boundary conditions 827. The plasticity provider 980, by e.g. the governance model 820, determine that data provided to the persistent storage for storage should be below a specific size limit and configures a new configurable functional operational governance process 822 (or changes an existing functional operational governance process 822) that specifies the data for the persistent storage. The awareness data 812 may further indicate that only one specific microsystem 200 provides data in violation of the new configurable functional operational governance process 822. Based on this, the plasticity provider 980, by e.g. the governance model 820, determine an opportunity for reconfiguration of microsystems 200 by providing an engineering plan 510 to the microsystem provider 960 specifying being substantially identical to an engineering plan describing the one specific microsystem 200 but that specifies that data should be in conformance with the new configurable functional operational governance process 822. The microsystem provider 960 may provide a new microsystem 200 to replace the one specific microsystem 200. The new microsystem 200 may differ from the one specific microsystem 200 in the new microsystem 200 provides data for storage at the persistent storage via data compression circuitry of another chiplet 110.

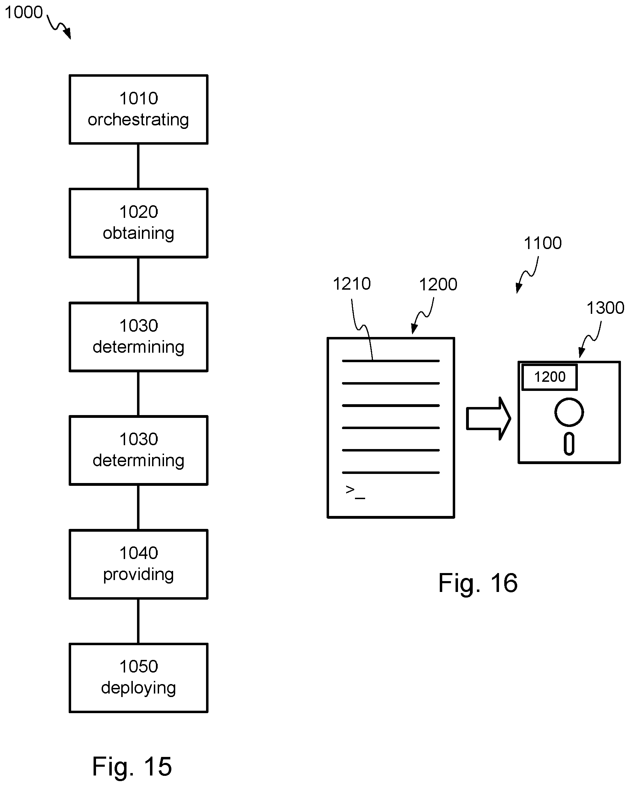

In Fig. 15, a schematic view of an exemplary method 1000 is shown. The method 1000 may be described as a method 1000 for providing plasticity to a computer system 900. In some examples, the method may be described as a method 1000 of providing autonomous structural and functional plasticity from a hardware, or hardware and software, perspective, of a computer system 900 comprising a plurality of hardware resources 910. In some examples, the method may be described as a method 1000 of providing autonomous structural and functional plasticity from a hardware, or hardware and software, perspective, of a chiplet arrangement 100 comprising a plurality of hardware resources 112. The method 1000 shown in Fig. 15 may be expanded and/or modified to comprise any suitable feature or function presented herein although not specifically mentioned in reference to Fig. 15. For instance, the method 1000 may comprise all or some of the actions, functions and features described with reference to the method 600 introduced in reference to Fig. 8, the plasticity plane 800 introduced with reference to Fig. 10 and/or the control plane 300 introduced with reference to Fig. 3. The method 1000 may be wholly, or partly, computer implemented method. Specifically, the computer system 900 or the chiplet arrangement 100 presented herein may be configured to cause performance of, or perform, some or all features of the method 1000.

The method 1000 comprises orchestrating 1010 one or more microsystems 200 of the computer system 900. The orchestrating 1010 may be provided e.g. as described herein in reference to the control plane 300. As previously mentioned in reference to the microsystems 200, each microsystem 200 comprises at least one hardware resource 910 and an associated microservice 400 that is addressable at the internal or external communications interface 920, 950 of the computer system 900. The method 1000 further comprises obtaining 1020 awareness data 812 associated with an environment 102, 104 of the computer system 900. The obtaining 1020 may be provided e.g. as described herein in reference to the awareness process 810. The method 1000 further comprises determining 1030 an opportunity of reconfiguration of microsystems of the chiplet arrangement based on the awareness data 812. The determining 1030 may be provided e.g. as described herein in reference to the governance model 820. In some optional examples, determining 1030 the opportunity of reconfiguration of microsystems 200 may be based on the operational governance process 821 and/or the governing boundary conditions 825. The method 1000 further comprises providing 1040 a new microsystem 200 based on the determined opportunity. The new microsystem 200 may be provided e.g. as outlined in the method 600 introduced in Fig. 8. The method 1000 further comprises deploying 1050 the new microsystem 200 at the computer system 900. The deployment 1050 may be provided e.g. as exemplified in Fig. 6.

In Fig. 16 a computer program product 1100 is shown. The computer program product 1100 comprises a computer program 1200 and a non-transitory computer readable medium 1300. The computer program 1200 may be stored on the computer readable medium 1300. The computer readable medium 1300 is, in Fig. 16, exemplified as a vintage 5,25" floppy disc, but may be embodied as any suitable non-transitory computer readable medium such as, but not limited to, hard disk drives (HDDs), solidstate drives (SSDs), optical discs (e.g., CD-ROM, DVD-ROM, CD-RW, DVD-RW), USB flash drives, magnetic tapes, memory cards, Read-Only Memories (ROM), network-attached storage (NAS), cloud storage etc.

The computer program 1200 comprises instruction 1210 e.g. program instruction, software code, that, when executed by processing circuitry cause the processing circuitry such as processing circuitry of the computer system 900 or the chiplet arrangement 100 to perform the method 1000 introduced with reference to Fig. 15.

### IMPLEMENTATION EXAMPLES

In the following, a number of non-limiting implementation examples will be presented. These examples are provided to give context to the possibilities, opportunities and impact of the teachings presented herein.

In a first example, the chiplet arrangement 100 of the present disclosure is installed in a laundry machine. The chiplet arrangement 100 controls dispensing of detergent, the wash cycle etc. based on a specific operational purpose 101 for the laundry machine. The chiplet arrangement is provided with a plurality of inputs connected to external sensors that obtain temperatures, conductivity, transparency etc. of water entering and exiting the laundry machine. The chiplet arrangement 100 is further provided with a plurality of outputs configured to control actuators, the motor and such of the laundry machine. Different inputs and different outputs are associated with different chiplets 110 of the chiplet arrangement 100. In this specific example, a first microsystem 200 is configured to control an amount of detergent used in a wash cycle. To this end, the first microsystem 200 comprises hardware resources 112 for obtaining a weight of the laundry in the laundry machine together with processing circuitry and storage. A second microsystem 200 is configured to control water into and out from the laundry machine. To this end, the second microsystem 200 comprises hardware resources 112 for controlling valves of the washing machine, and sensors for obtaining parameters of the water entering and exiting the laundry machine together with processing circuitry and storage. At some point during a lifecycle of the chiplet arrangement 100, a new detergent is introduced. The new detergent results in the conductivity of the water exiting the laundry machine is changed. This is indicated by awareness data 812 obtained by the awareness process 810. The change in conductivity is related to an amount of residual, e.g. unused, detergent being present in the water exiting the washing machine. The operational purpose indicates that, energy and detergent consumption of the washing machine should be minimized without compromising cleaning of the laundry. Based on this, the governance model 820 determines that there is an opportunity for reconfiguration of the first microsystem 200 of the chiplet arrangement 100 where the amount of detergent used in reduced. This first reconfiguration is a very simple example providing autonomous functional plasticity from a software perspective. However, at a later stage of the lifecycle of the chiplet arrangement 100, the sensor providing the weight of the laundry in the laundry machine breaks and fails to report any data. The missing weight is indicated by awareness data 812 obtained by the awareness process 810 and the governance model 820 determines that there is an opportunity of reconfiguration of the microsystems by providing a new microsystem that provides the functionality of the weight sensor. The broken weight sensor means that it is no longer available in the hardware data set 526. The plasticity plane 800 provides an engineering plan specifying that a third microsystem 200 configured to, on demand, provide a weight of the laundry to the first microsystem 200. Through e.g. the iterative process of validating 645 microsystem hardware models presented in reference to Fig. 8, a third microsystem 200 utilizing a current sensor of the motor laundry machine providing a weight of the laundry is provided. The third microsystem 200 is configured to control the motor to rotate and a specific rotational speed, and measure the current required for this operation. The association between current and weigh may be provided by historical data from a time when the weigh sensor was functional. This second reconfiguration is an example providing autonomous functional plasticity from a software and hardware perspective.

In a second example, described in slightly less details for reasons of brevity, a chiplet arrangement 100 is arranged to control a district heating center of a building. The chiplet arrangement 100 measures and controls a temperature inside the building by controlling valves and a heat exchangers based in the inside temperature, forward district heating forward temperature, district heating reverse temperature and an outside temperatures. The chiplet arrangement 100 is provided with a microsystem 200 configured with a microservice 400 at the external communications network that provides these temperatures to e.g. a data center. Resulting from e.g. vandalism, the outside temperature sensor is broken. A new microsystem 200 is deployed that obtains the outside temperature from a weather service available via the external communications network 150. After some time, an adjacent building is provided with a corresponding chiplet arrangement 100 arranged to control the district heating center of the adjacent building. This change in the external environment 104 of the chiplet arrangement is detected and a new microsystem 200 is deployed that obtains the outside temperature from the chiplet arrangement 100 of the adjacent building, and the microsystem obtaining the outside temperature form the weather service may be removed.

The first and second examples react autonomously to changes in an external environment 104 of the chiplet arrangement 100. In a third example, a chiplet arrangement 100 is provided wherein a first microsystem 200 accurately measures a current by a hardware resource 112 of a chiplet 110 in the form of an analogue to digital (AD) converted. In order to reduce the noise of the measured current, the microsystem 200 performs a series of measurements and averages out result to reduce noise. However, obtaining the series of currents is time consuming and the AD converter consumes energy each time a current is sampled. The chiplet arrangement 100 has an operational purpose 101 stating that energy consumption should be reduced, and as the first microsystem consumes the most current, the plasticity plane determines that there is an opportunity for reconfiguration. An engineering plan 510 being substantially identical to the engineering plan 510 of the first chiplet arrangement 100 is provided but with a requirement for a reduced current consumption. Through e.g. the iterative process of validating 645 microsystem hardware models presented in reference to Fig. 8, a new microsystem 200 is provided utilizing the same AD as the first microsystem 200 but he AD is provided with a sample clock from another chiplet 110. This clock is more accurate and has lower phase noise reducing noise in the sampled currents such that the averaging process may be removed. This is an example of plasticity from a hardware perspective.

In a fifth example, a chiplet arrangement 100 is configured to control and optimize a factory producing and packaging high end wrenches. The chiplet arrangement 100 is arranged to control both a production line and a packaging line of the factory. To ensure quality, and partly for marketing purposes, an operator examines each wrench exiting the production line before manually moving it to the packaging line. The wrenches exits the production line handle first. The plasticity plane 800 of the chiplet arrangement 100 is provided with the learning model 840 and the learning model 840 indicates that the production pace differs between different operators. There are two sets of production paces, where a few operators are at the higher pace, and the majority of the operators are at the lower pace. The governance model 810 determines that there is an opportunity for reconfiguration by slightly increasing the production pace when a faster operator is detected. One year, the factory decides to award all operators with pair of premium scissors as a Christmas gift. The factory adds whether each operator is lefthanded or right-handed to a personnel file of the respective operator. The awareness process 810 notes this added data, and the governance model 820 determines that there is a clear correlation between handedness of the operator and production pace, lefthanded operators are all at the higher production pace and the right-handed operators are all at the lower production pace. The governance model 820 determines, optionally by iterative attempts, that by presenting the wrenches head first to the right-handed operators the higher production pace may be maintained for all operators. The fifth example is an example of how human interaction may provide part of the awareness data 812 and how the teachings of the present disclosure may form part of an engineering process.

In a sixth example, a computer system 900 is configured to surveil, control and optimize an engineering process at a development company. The plasticity orchestrator of the computer system 900 is configured with an awareness process 810 and a governance model 820 surveilling the engineering process at the development company. The awareness process 810 obtains awareness data 812 that may comprise reports, time plans, schedules, engineering data etc. The governance model 820 notes that a specific department methodically ranks risks related to deliveries from that department significantly higher than other departments rank their corresponding risks. The governance model 820 determines an opportunity of reconfiguration and a microsystem 200 is deployed that is configured to specifically monitor risks and flag risks with a deviating risk score. The computer system 900 presents an updated development process to the company where flagged risks have to be toll-gated by independent departments before accepted. The training model 840 may learn, from previous and/or present awareness data 812, that sourcing of components for prototype production is a significant contributor for delays in prototype builds. The governance model 820 determines this as an opportunity for reconfiguration and a microsystem is deployed where preliminary and conceptual material lists of a hardware department are shared with the a sourcing department. The computer system 900 presents an updated development process to the company where the sourcing department is employed with, based on the preliminary and conceptual material lists, contact suppliers to negotiate preliminary deliveries. The sixth example is an example of how the plasticity plane 800 may form part of an engineering process and operate to improve such engineering processes even if the actual work of the engineering process is provided by humans.

As mentioned, the above examples are brief and significantly simplified and provided to give insight into how the features of the present disclosure combine to provide autonomous structural and functional plasticity from a hardware, or hardware and software.

### CLAUSES

The following clauses are provided to present workable aspects and embodiments of the teaching presented herein. The scope of protection is defined by the appended claims at the end of this disclosure.
Clause 1. A chiplet arrangement (100) configured to provide autonomous structural and functional plasticity from a hardware, or hardware and software, perspective, wherein the chiplet arrangement (100) is controllable via an external communications interface (150) of the chiplet arrangement (100) and the chiplet arrangement (100) comprises an internal communications interface (120) and at least one chiplet (110) connected to the internal communications interface (120), wherein the at least one chiplet (110) comprises at least one hardware resource (112); and wherein the chiplet arrangement (100) is provided with:
   a chiplet control plane (300) configured to:
      - orchestrate one or more microsystems (200) of the chiplet arrangement (100), each microsystem (200) comprising at least one hardware resource (112) and an associated microservice (400) addressable at the internal communications interface (120) and/or at the external communications interface (150);
   a chiplet placticity plane (800) configured to:
      - by an awareness process (810), provide awareness data (812) associated with an environment (102, 104) of the chiplet arrangement (100),
      - by a governance model (820), determine an opportunity of reconfiguration of the one or more microsystems (200) of the chiplet arrangement (100) based on the awareness data (812),
      - cause provisioning of a new microsystem (200') based on the determined opportunity, and accordingly
      - control the chiplet control plane (300) to deploy the new microsystem (200') at the chiplet arrangement (100).
Clause 2. The chiplet arrangement (100) of clause 1, wherein the awareness data (812) comprises functional awareness data (813) describing, or otherwise defining, a change in a functional characteristic of the chiplet arrangement (100) such as a change in an internal and/or external environment of the chiplet arrangement (100), and the governance model (820) of the plasticity plane (800) is configured to:
   - determine an opportunity of reconfiguration of microsystems (200) based on the functional awareness data (813).
Clause 3. The chiplet arrangement (100) of clause 2, wherein the change in a functional characteristic of the chiplet arrangement (100) comprises a change in a hardware resource (112) of the chiplet arrangmenet (100).
Clause 4. The chiplet arrangement (100) of any one of clauses 1 to 3, wherein the awareness data (812) comprises non-functional awareness data (814) describing, or otherwise defining, a change in a non-functional characteristic of the chiplet arrangement (100) such as a change in performance, reliability, security, and/or usability of the chiplet arrangement (100), and the governance model (820) of the plasticity plane (800) is configured to:
   - determine an opportunity of reconfiguration of the one or more microsystems (200) based on the change in non-functional awareness data (814).
Clause 5. The chiplet arrangement (100) of clause 4, wherein the change in a non-functional characteristic of the chiplet arrangement (100) comprises a change in a resource utilization of the chiplet arrangement (100).
Clause 6. The chiplet arrangement (100) of any one of clauses 1 to 5, wherein the governance model (820) is configured to orchestrate development, deployment, and/or maintenance of microsystems (200) of the chiplet arrangement (100).
Clause 7. The chiplet arrangement (100) of any one of clauses 1 to 6, wherein the governance model (820) is configured to determine the opportunity of reconfiguration of the one or more microsystems (200) based on an operational governance process (821) and/or governing boundary conditions (825) of the governance model (820).
Clause 8. The chiplet arrangement (100) of clause 7, wherein the operational governance process (821) of the governance model (820) comprises a functional operational governance process (822) that is configured to determine the opportunity of reconfiguration of microsystems (200) based on a change in an operational purpose (101) of the chiplet arrangement (100) such as a change in a timing requirement, temperature requirement, latency requirement and/or energy consumption requirement.
Clause 9. The chiplet arrangement (100) of clause 7 or 8, wherein the operational governance process (821) of the governance model (820) comprises a non-functional operational governance process (823) that is configured to determine the opportunity of reconfiguration of microsystems (200) based on a change in a non-functional operational purpose (101) of the chiplet arrangement (100) such as a performance requirement, reliability requirement, scalability requirement, security requirement, and/or usability requirement of the chiplet arrangement (100).
Clause 10. The chiplet arrangement (100) of any one of clauses 7 to 9, wherein the governing boundary conditions (825) of the governance model (820) comprises a functional governing boundary condition (826), such as a physical boundary condition, a functional objective, a non-functional objective and/or conditions relating to interaction with internal and/or external microsystems (200) and their associated microservices (400), and the governance model (820) is configured to determine the opportunity of reconfiguration of microsystems (200) based on a violation of a functional governing boundary condition (826).
Clause 11. The chiplet arrangement (100) of any one of clauses 7 to 10, wherein the governing boundary conditions (825) of the governance model (820) comprises a non-functional governing boundary condition (827), such an safety critical boundary condition, a security boundary conditions, an ethical boundary condition and/or an ideological boundary condition, and the governance model (820) is configured to determine the opportunity of reconfiguration of microsystems (200) based on a violation of functional governing boundary condition (827).
Clause 12. The chiplet arrangement (100) of any one of clauses 7 to 11, wherein the governing boundary conditions (825) comprise one or more reconfigurable governing boundary conditions (825).
Clause 13. The chiplet arrangement (100) of any one of clauses 7 to 12, wherein the governing boundary conditions (825) comprise one or more predetermined static governing boundary conditions(825).
Clause 14. The chiplet arrangement (100) of clauses 12 and 13, wherein reconfiguration of the reconfigurable governing boundary conditions such that one or more of the reconfigurable governing boundary conditions (825) violates the predetermined static governing boundary conditions (825) is prohibited.
Clause 15. The chiplet arrangement (100) of any one of clauses 7 to 14, wherein the awareness process (810) and/or the operational governance process (820) are processes reconfigurable within constraints defined by the governing boundary conditions (825).
Clause 16. The chiplet arrangement (100) of any one of clauses 1 to 15, wherein the governance model (820) is configured to determine opportunity of reconfiguration of microsystems (200) based on one or more stochastic variables.
Clause 17. The chiplet arrangement (100) of any one of clauses 1 to 16, wherein deploying the new microsystem (200') comprises decommissioning one or more microsystems of the chiplet arrangement (100).
Clause 18. The chiplet arrangement (100) of any one of clauses 1 to 17, wherein providing a new microsystem (200') based on the determined opportunity, comprises:
   - providing an engineering plan (510) comprising hardware requirements (512) and software requirements (514) of a new microsystem (200) for producing and/or consuming one or more microservices (400).
Clause 19. The chiplet arrangement (100) of clauses 18, wherein the chiplet placticity plane (800) is configured to provide the engineering plan () based on one or more stochastic variables.
Clause 20. The chiplet arrangement (100) of clause 18 or 19, wherein providing a new microsystem (200') based on the determined opportunity, comprises:
   - obtaining (620) a chiplet arrangement hardware model (522) describing an electrical environment of a chiplet arrangement (100);
   - estimating (630) a microsystem hardware model (530) based on the hardware requirements (512) and a hardware data set (526) describing hardware resources (112) of the chiplet arrangement (100); and
   - simulating (640) the estimated microsystem hardware model (530) by electrical simulations based on the chiplet arrangement hardware model (522) to provide one or more hardware capabilities (534).
Clause 21. The chiplet arrangement (100) of clause 20 wherein providing a new microsystem (200') based on the determined opportunity, comprises:
   - obtaining (650) a chiplet arrangement environment model (524) describing a software environment of the chiplet arrangement (100);
   - estimating (660) a microsystem software model (560) comprising the produced and/or consumed one or more microservices (400) using the hardware capabilities (534) and the software requirements (514); and
   - simulating (670) the estimated microsystem software model (560) on the chiplet arrangement environment model (524) to provide one or more software capabilities (564).
Clause 22. The chiplet arrangement (100) of clause 21 wherein providing a new microsystem (200') based on the determined opportunity, comprises:
   - compiling (680) the estimated microsystem hardware model (530), the estimated microsystem software model (560), the one or more hardware capabilities (534), the one or more software capabilities (564) to a new microsystem (200') exposable at the internal communications interface (120) and/or at the external communications interface (150) as a new microservice (400').
Clause 23. The chiplet arrangement (100) of clause 22 wherein providing a new microsystem (200') based on the determined opportunity, further comprises: further comprises:
   - validating (645) the hardware capabilities (534) based on the hardware requirements (512) providing hardware validation data.
Clause 24. The chiplet arrangement (100) of clause 22 or 23 wherein providing a new microsystem (200') based on the determined opportunity, further comprises:
   - providing alternative hardware capabilities (534) and an estimated alternative microsystem hardware model (530) for further processing by:
   - estimating (630) the alternative microsystem hardware model (530) based on the estimated microsystem hardware model (530), the hardware requirements (512), the hardware data set (526) and the hardware capabilities (534) comprising models of hardware resources (112) available on the chiplet arrangement (100); and
   - simulating (640) the estimated alternative microsystem hardware model (530) by electrical simulations to provide one or more alternative hardware capabilities (534).
Clause 25. The chiplet arrangement (100) of any one of clauses 22 to 24 wherein providing alternative hardware capabilities (534) and the estimated alternative microsystem hardware model (530) for further processing is performed selectively based on the hardware validation data.
Clause 26. The chiplet arrangement (100) of clause 24 or 25, wherein providing a new microsystem (200') based on the determined opportunity, further comprises:
   - validating (645) the alternative hardware capabilities (534) based on the hardware requirements (512) providing alternative hardware validation data.
Clause 27. The chiplet arrangement (100) of clause 23 and 26, wherein providing a new microsystem (200') based on the determined opportunity, further comprises, before estimating (660) the microsystem software model (560),
   - selecting one of the microsystem hardware model (530) or the alternative microsystem hardware model (530) as microsystem hardware model (530) for further processing based on processing of the hardware validation data and the alternative hardware validation data.
Clause 28. The chiplet arrangement (100) of any one of clauses 22 to 27, wherein providing a new microsystem (200') based on the determined opportunity, further comprises:
   - validating (675) the software capabilities (564) based on the software requirements (514) providing software validation data.
Clause 29. The chiplet arrangement (100) of any one of clauses 22 to 27, wherein providing alternative hardware capabilities (534) and the estimated alternative microsystem hardware model (530) for further processing is performed selectively based on the software validation data.
Clause 30. The chiplet arrangement (100) of any one of clauses 22 to 29, wherein providing a new microsystem (200') based on the determined opportunity, further comprises:
   - providing alternative software capabilities (564) and an estimated alternative microsystem software model (560) by:
   - estimating (660) the alternative microsystem software model (560) using the hardware capabilities (534) and the software requirements (514); and
   - simulating (670) the estimated alternative microsystem software model (560) on the chiplet arrangement environment model (524) to provide one or more alternative software capabilities (564).
Clause 31. The chiplet arrangement (100) of clause 29 and 30, wherein providing alternative software capabilities (564) and the estimated alternative microsystem software model (560) for further processing is performed selectively based on the software validation data.
Clause 32. The chiplet arrangement (100) of clause 30 or 31, wherein providing a new microsystem (200') based on the determined opportunity, further comprises:
   - validating (675) the alternative software capabilities (564) based on the software requirements (514) providing alternative software validation data.
Clause 33. The chiplet arrangement (100) of clauses 29 and 32, wherein providing a new microsystem (200') based on the determined opportunity, further comprises, before providing the estimated microsystem hardware model (530) and the estimated microsystem software model (560) as a microsystem model (580):
   - selecting one of the microsystem software model (560) or the alternative microsystem software model (560) as microsystem software model (560) for further processing based on processing of the software validation data and the alternative software validation data.
Clause 34. The chiplet arrangement (100) of any one of clauses 22 to 33, wherein the software requirements (514) comprise at least one compatibility constraint, at least one performance constraint and/or at least one security constraint.
Clause 35. The chiplet arrangement (100) of any one of clauses 22 to 34, wherein the hardware requirements (512) comprise at least one physical constraint, at least one connectivity constraint and/or at least one availability constraint.
Clause 36. The chiplet arrangement (100) of any one of clauses 22 to 35, wherein the chiplet arrangement environment model (524) is a digital twin of the chiplet arrangement (100).
Clause 37. The chiplet arrangement (100) of any one of clauses 22 to 36, wherein the chiplet arrangement hardware model (522) comprises hardware models of one or more chiplets (110) of the chiplet arrangement (100).
Clause 38. The chiplet arrangement (100) of any one of clauses 22 to 37, wherein the chiplet arrangement hardware model (522) comprises physical hardware devices of one or more chiplets (110) of the chiplet arrangement (100).
Clause 39. The chiplet arrangement (100) of any one of clauses 22 and 38, wherein providing a new microsystem (200') based on the determined opportunity, further comprises:
   - estimating (685) a utilization of the chiplet arrangement (100) based on the microsystem model (580) and the microsystem capabilities (584).
Clause 40. The chiplet arrangement (100) of any one of clauses 1 and 38, wherein the chiplet control plane (300) comprises:
   - a resource orchestrator (410) configured to instantiate one or more microsystems (200) of the chiplet arrangement (100), each microsystem (200) comprising at least one hardware resource (112) and an addressable connection at the internal communications interface (120), and
   - a network manager (440) configured to control communication between the microsystems (200) and the external communications interface (150) of the chiplet arrangement (100) by exposing one or more microsystems (200) as microservices (400) at the external communications interface (150).
Clause 41. The chiplet arrangement (100) of clause 40, comprising two or more chiplets (110) connected by the internal communications interface (120).
Clause 42. The chiplet arrangement (100) of clause 40 or 41, wherein the resource orchestrator (410) is configured to configure instantiation of microsystems (200) based on availability and/or utilization of hardware resource(s) (112).
Clause 43. The chiplet arrangement (100) of any one of clause 40 to 42, wherein the resource orchestrator (410) is configured to configure instantiation of microservices (400) based on availability and/or utilization of hardware resource(s) (112).
Clause 44. The chiplet arrangement (100) of any one of clause 40 to 44, wherein the resource orchestrator (410) comprises a preconfigured microsystem (200) of the chiplet arrangement (100) associated with one or more preconfigured microservices (400) of the chiplet arrangement (100).
Clause 45. The chiplet arrangement (100) of any one of clause 40 to 44, wherein the resource orchestrator (410) is further configurable to instantiate microservices (400) associated with specific microsystems (200).
Clause 46. The chiplet arrangement (100) of any one of clause 40 to 45, wherein at least one microsystem (200) is configured to consume or produce one or more microservices (400) associated with the at least one microsystem (200).
Clause 47. The chiplet arrangement (100) of any one of clause 40 to 46, wherein the network manager (440) is configured to configure communication between integrated hardware resources (112) based on orchestration information provided by the resource orchestrator (410).
Clause 48. The chiplet arrangement (100) of any one of clause 40 to 47, wherein the network manager (440) is a preconfigured microsystem (200) of the chiplet arrangement (100) associated with one or more preconfigured microservices (400) of the chiplet arrangement (100).
Clause 49. The chiplet arrangement (100) of any one of clauses 40 to 48, wherein the control plane (300) comprises a resource registry (430) comprising data indicating at least some of the hardware resources (112) of the chiplet arrangement (100).
Clause 50. The chiplet arrangement (100) of clause 50. Wherein the resource registry (430) comprising data indicating all hardware resources (112) of all chiplets (110) of the chiplet arrangement (100).
Clause 51. The chiplet arrangement (100) of any one of clauses 40 to 50, wherein the control plane (300) comprises a resource scheduler (420) configured to schedule utilization of the hardware resources (112).
Clause 52. The chiplet arrangement (100) of clause 51, wherein the resource scheduler (420) is a preconfigured microsystem (200) of the chiplet arrangement (100) associated with one or more preconfigured microservices (400) of the chiplet arrangement (100).
Clause 53. The chiplet arrangement (100) of any one of clause 40 to 52, wherein at least one hardware resources (112) is a network interface configured to connect the chiplet (110) to the chiplet network (120).
Clause 54. The chiplet arrangement (100) of any one of clause 40 to 53, wherein at least one hardware resources (112) is a computational hardware resource such as a CPU, a GPU or a microcontroller, and/or wherein at least one hardware resource (112) is a memory hardware resource such as a volatile memory or a non-volatile memory, and/or wherein at least one hardware resource (112) is a sensor hardware resource (112) such as a temperature sensor, a pressure sensor, a light sensor, an optical sensor or a fingerprint sensor, and/or wherein at least one hardware resource (112) is a peripheral hardware resource (112) such as an interrupt controller, a DMA controller, a Digital I/O, a DAC, an ADC or a clock, and/or wherein at least one hardware resource (112) is a communication hardware resource (112) such as an I2C interface, a PCIe interface or a UCIe interface, and/or wherein at least one hardware resource (112) is an actuator hardware resource (112) such as a loudspeaker, a buzzer, a light source or a display.
Clause 55. The chiplet arrangement (100) of any one of clauses 40 to 54, wherein each hardware resource (112) provide at least one dedicated hardware functionality.
Clause 56. The chiplet arrangement (100) of any one of clauses 1 to 55, wherein the chiplet arrangement (100) is a chiplet package forming part of an integrated circuit, IC.
Clause 57. The chiplet arrangement (100) of any one of clauses 1 to 56, wherein the plasticity plane (800) is configured with a learning model (840) based on machine learning, ML.
Clause 58. The chiplet arrangement (100) of clause 57, wherein the learning model (840) is configured to, based on previous and/or current awareness data (812), improve the plasticity plane (800).
Clause 59. The chiplet arrangement (100) of clause 58, wherein the learning model (840) is configured to, based on previous and/or current awareness data (812), improve the awareness process (810) of the plasticity plane (800).
Clause 60. The chiplet arrangement (100) of clause 58 or 59, wherein the learning model (840) is configured to, based on previous and/or current awareness data (812), improve the governance model (820) of the plasticity plane (800).
Clause 61. The chiplet arrangement (100) of any one of clauses 58 to 60, wherein the learning model (840) is configured to, based on previous and/or current awareness data (812), improve a randomness model (810) of the plasticity plane (800).
Clause 62. A computer implemented method (1000) of providing autonomous structural and functional plasticity from a hardware, or hardware and software, perspective, of a computer system (900) comprising a plurality of hardware resources (910), wherein the computer implemented method (1000) comprises:
   - orchestrating (1010) one or more microsystems (200) of the computer system (900), each microsystem (200) comprising at least one hardware resource (910) and an associated microservice (400) addressable at an internal or external communications interface (920, 950) of the computer system (900);
   - obtaining (1020), by an awareness process (810), awareness data (812) associated with an environment (102, 104) of the computer system (900),
   - determining (1030), by a governance model (820), opportunity of reconfiguration of microsystems (200) of the computer system (900) based on the awareness data (812),
   - providing (1040) a new microsystem (200') based on the determined opportunity, and
   - deploying (1050) the new microsystem (200') at the computer system (900).
Clause 63. The computer implemented method (100) of clause 62, further comprising:
   - determining the opportunity of reconfiguration of microsystems (200) further based on an operational governance process (821) and/or governing boundary conditions (825) of the governance model (820).
Clause 64. A computer program product (1100) comprising program code (1210) for performing, when executed by processing circuitry of a computer system (900), the computer implemented method (1000) of clause 62 or 63.
Clause 65. A non-transitory computer-readable storage medium (1300) comprising instructions (1210), which when executed by processing circuitry of a computer system (900), cause the processing circuitry to perform the computer implemented method (1000) of clause 62 or 63.

Modifications and other variants of the described embodiments will come to mind to one skilled in the art having benefit of the teachings presented in the foregoing description and associated drawings. Therefore, it is to be understood that the embodiments are not limited to the specific example embodiments described in this disclosure and that modifications and other variants are intended to be included within the scope of this disclosure. For example, while aspects, examples and embodiments of the invention have been described with reference chiplet arrangements or computer systems, persons skilled in the art will appreciate that the various aspects, examples and embodiments described throughout this disclosure may equivalently be applied to any processing circuitry operatively connected to hardware resources and suitable for providing the features listed herein. Furthermore, although specific terms may be employed herein, they are used in a generic and descriptive sense only and not for purposes of limitation. Therefore, a person skilled in the art would recognize numerous variations to the described embodiments that would still fall within the scope of the appended claims. Furthermore, although individual features may be included in different claims (or embodiments), these may possibly advantageously be combined, and the inclusion of different claims (or embodiments) does not imply that a combination of features is not feasible and/or advantageous. In addition, singular references do not exclude a plurality. Finally, reference signs in the claims are provided merely as a clarifying example and should not be construed as limiting the scope of the claims in any way.

## Claims

1. A chiplet arrangement (100) configured to provide autonomous structural and functional plasticity from a hardware, or hardware and software, perspective, wherein the chiplet arrangement (100) is controllable via an external communications interface (150) of the chiplet arrangement (100) and the chiplet arrangement (100) comprises an internal communications interface (120) and at least one chiplet (110) connected to the internal communications interface (120), wherein the at least one chiplet (110) comprises at least one hardware resource (112); and wherein the chiplet arrangement (100) is provided with:
a chiplet control plane (300) configured to:
- orchestrate one or more microsystems (200) of the chiplet arrangement (100), each microsystem (200) comprising at least one hardware resource (112) and an associated microservice (400) addressable at the internal communications interface (120) and/or at the external communications interface (150);
a chiplet placticity plane (800) configured to:
- by an awareness process (810), provide awareness data (812) associated with an environment (102, 104) of the chiplet arrangement (100),
- by a governance model (820), determine an opportunity of reconfiguration of the one or more microsystems (200) of the chiplet arrangement (100) based on the awareness data (812),
- cause provisioning of a new microsystem (200') based on the determined opportunity, and accordingly
- control the chiplet control plane (300) to deploy the new microsystem (200') at the chiplet arrangement (100).

2. The chiplet arrangement (100) of claim 1, wherein the awareness data (812) comprises functional awareness data (813) describing, or otherwise defining, a change in a functional characteristic of the chiplet arrangement (100) such as a change in an internal and/or external environment of the chiplet arrangement (100), and the governance model (820) of the plasticity plane (800) is configured to:
- determine an opportunity of reconfiguration of microsystems (200) based on the functional awareness data (813).

3. The chiplet arrangement (100) of claim 2, wherein the change in a functional characteristic of the chiplet arrangement (100) comprises a change in a hardware resource (112) of the chiplet arrangmenet (100).

4. The chiplet arrangement (100) of any one of claims 1 to 3, wherein the awareness data (812) comprises non-functional awareness data (814) describing, or otherwise defining, a change in a non-functional characteristic of the chiplet arrangement (100) such as a change in performance, reliability, security, and/or usability of the chiplet arrangement (100), and the governance model (820) of the plasticity plane (800) is configured to:
- determine an opportunity of reconfiguration of the one or more microsystems (200) based on the change in non-functional awareness data (814).

5. The chiplet arrangement (100) of claim 4, wherein the change in a non-functional characteristic of the chiplet arrangement (100) comprises a change in a resource utilization of the chiplet arrangement (100).

6. The chiplet arrangement (100) of any one of claims 1 to 5, wherein the governance model (820) is configured to determine the opportunity of reconfiguration of the one or more microsystems (200) based on an operational governance process (821) and/or governing boundary conditions (825) of the governance model (820).

7. The chiplet arrangement (100) of claim 6, wherein the operational governance process (821) of the governance model (820) comprises a functional operational governance process (822) that is configured to determine the opportunity of reconfiguration of microsystems (200) based on a change in an operational purpose (101) of the chiplet arrangement (100), such as a change in a timing requirement, temperature requirement, latency requirement and/or energy consumption requirement.

8. The chiplet arrangement (100) of claim 6 or 7, wherein the operational governance process (821) of the governance model (820) comprises a non-functional operational governance process (823) that is configured to determine the opportunity of reconfiguration of microsystems (200) based on a change in an operational purpose (101) of the chiplet arrangement (100) such as a performance requirement, reliability requirement, scalability requirement, security requirement, and/or usability requirement of the chiplet arrangement (100).

9. The chiplet arrangement (100) of any one of claims 6 to 8, wherein the governing boundary conditions (825) of the governance model (820) comprises a functional governing boundary condition (826), such as a physical boundary condition, a functional objective, a non-functional objective and/or conditions relating to interaction with internal and/or external microsystems (200) and their associated microservices (400), and the governance model (820) is configured to determine the opportunity of reconfiguration of microsystems (200) based on a violation of a functional governing boundary condition (826).

10. The chiplet arrangement (100) of any one of claims 6 to 9, wherein the governing boundary conditions (825) of the governance model (820) comprises a non-functional governing boundary condition (827), such an safety critical boundary condition, a security boundary conditions, an ethical boundary condition and/or an ideological boundary condition, and the governance model (820) is configured to determine the opportunity of reconfiguration of microsystems (200) based on a violation of functional governing boundary condition (827).

11. The chiplet arrangement (100) of any one of claims 6 to 10, wherein the governing boundary conditions (825) comprise one or more reconfigurable governing boundary conditions (825).

12. The chiplet arrangement (100) of any one of claims 1 to 11, wherein the governance model (820) is configured to determine opportunity of reconfiguration of microsystems (200) based on one or more stochastic variables.

13. A computer implemented method (1000) of providing autonomous structural and functional plasticity from a hardware, or hardware and software, perspective, of a computer system (900) comprising a plurality of hardware resources (910), wherein the computer implemented method (1000) comprises:
- orchestrating (1010) one or more microsystems (200) of the computer system (900), each microsystem (200) comprising at least one hardware resource (910) and an associated microservice (400) addressable at an internal or external communications interface (920, 950) of the computer system (900);
- obtaining (1020), by an awareness process (810), awareness data (812) associated with an environment (102, 104) of the computer system (900),
- determining (1030), by a governance model (820), opportunity of reconfiguration of microsystems (200) of the computer system (900) based on the awareness data (812),
- providing (1040) a new microsystem (200') based on the determined opportunity, and
- deploying (1050) the new microsystem (200') at the computer system (900).

14. The computer implemented method (100) of claim 13, further comprising:
determining the opportunity of reconfiguration of microsystems (200) further based on an operational governance process (821) and/or governing boundary conditions (825) of the governance model (820).

15. A computer program product (1100) comprising program code (1210) for performing, when executed by processing circuitry of a computer system (900), the computer implemented method (1000) of claim 13 or 14.
